# EUROPEAN PATENT APPLICATION

(11) **EP 4 776 742 A1**
(43) Date of publication of application: **15.07.2026**
(21) Application number: 24870348.0
(22) Date of filing: 02.09.2024
(51) Int. Cl.: H04W 76/10

(54) **COMMUNICATION METHOD AND APPARATUS**

(30) Priority: 26.09.2023 CN 202311259622
(71) Applicant: HUAWEI TECHNOLOGIES CO., LTD., Shenzhen 518129 (CN)
(72) Inventor: ZHU, Fangyuan, Shenzhen, Guangdong 518129 (CN); GE, Cuili, Shenzhen, Guangdong 518129 (CN); YANG, Yanmei, Shenzhen, Guangdong 518129 (CN); XU, Shengfeng, Shenzhen, Guangdong 518129 (CN)
(74) Representative: Thun, Clemens
(86) International application number: PCT/CN2024/116389
(87) International publication number: WO 2025/066802

(57) **Abstract**

Embodiments of this application provide a communication method and apparatus. A first user plane function network element receives a first data packet from a terminal device, where the first data packet corresponds to a first application; determines a second user plane function network element based on at least one DNAI and a resource required by the first application, where the at least one DNAI is a DNAI corresponding to the first application, and the second user plane function network element corresponds to a first DNAI in the at least one DNAI; and sends the first data packet to the second user plane function network element. In embodiments of this application, when the first user plane function network element forwards the first data packet to the second user plane function network element corresponding to the first DNAI, because the first DNAI is selected based on the resource required by the first application, the resource that is of the first application and that corresponds to the first DNAI can support access by the terminal device. In this way, a delay in accessing the first application by the terminal device is reduced.

## Description

### CROSS-REFERENCE TO RELATED APPLICATIONS

This application claims priority to Chinese Patent Application No. 202311259622.1, filed with the China National Intellectual Property Administration on September 26, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a user plane function (user plane function, UPF) network element in a 5th generation (5th generation, 5G) network may forward a data packet from a terminal device to a multi-access edge computing (multi-access edge computing, MEC) platform. The UPF network element and the MEC platform correspond to a same data network access identifier (data network access identifier, DNAI). If the data packet corresponds to a specific application, an application server (application server, AP) that supports the application and that is deployed on the MEC platform may process the data packet.

However, the application server that supports the application and that is deployed on the MEC platform may not be able to process the data packet in a timely manner due to insufficient computational power resources. Consequently, a delay of accessing the application by the terminal device is caused to be long.

### SUMMARY

Embodiments of this application provide a communication method and apparatus, to reduce an access delay.

According to a first aspect, an embodiment of this application provides a communication method. The method may be performed by a first user plane function network element, or may be performed by a chip system. The chip system can implement a function of the first user plane function network element. The method includes: receiving a first data packet from a terminal device, where the first data packet corresponds to a first application; determining a second user plane function network element based on at least one DNAI and a resource required by the first application, where the at least one DNAI is a DNAI corresponding to the first application, and the second user plane function network element corresponds to a first DNAI in the at least one DNAI; and sending the first data packet to the second user plane function network element.

In this embodiment of this application, after receiving the first data packet, the first user plane function network element may determine the second user plane function network element with reference to the resource required by the first application. For example, an MEC platform corresponding to a DNAI corresponding to the second user plane function network element is an MEC platform whose resource can support processing of the first data packet. Therefore, after the first user plane function network element sends the first data packet to the second user plane function network element, the first data packet can be enabled to be processed by the MEC platform corresponding to the second user plane function network element, thereby improving data packet processing efficiency, and reducing a delay in accessing the first application by the terminal device.

In an optional implementation, determining the second user plane function network element includes: sending the first DNAI to a first network element, and receiving an address of the second user plane function network element from the first network element. In this implementation, the first user plane function network element can obtain, by interacting with the first network element, the address of the second user plane function network element corresponding to the first DNAI, and does not need to prestore an address of a user plane function network element corresponding to a DNAI. Therefore, storage space of the first user plane function network element can be saved.

In an optional implementation, the first network element includes a session management function network element or a network repository function network element.

In an optional implementation, determining the second user plane function network element includes: determining the address of the second user plane function network element based on an address of a user plane function network element corresponding to the at least one DNAI, where the user plane function network element corresponding to the at least one DNAI includes the second user plane function network element. In this implementation, the first user plane function network element may alternatively determine the address of the second user plane function network element by using the prestored address of the user plane function network element corresponding to the DNAI, thereby reducing an interaction process of network elements.

In an optional implementation, the method further includes: sending the address of the second user plane function network element to the session management function network element. In this implementation, the session management function network element can determine that a next-hop user plane function network element selected when the first user plane function network element performs routing and forwarding is the second user plane function network element, and the next-hop user plane function network element may be a next hop of the first user plane function network element, or may be a next hop of a base station, so that corresponding processing can be performed, for example, requesting the first user plane function network element or the base station to establish a tunnel (for example, an N9 tunnel or an N3 tunnel) with the second user plane function network element to forward a data packet, or determining whether the data packet can be forwarded to the second user plane function network element, or the like. For example, before selecting the second user plane function network element as the next-hop user plane function network element, the first user plane function network element may have selected a specific user plane function network element (for example, a user plane function network element A) different from the second user plane function network element as the next-hop user plane function network element. In other words, the first user plane function network element may have forwarded a received data packet to an MEC platform (for example, an MEC platform A) corresponding to a DNAI corresponding to the user plane function network element A for processing. Therefore, the session management function network element may request, from an application function network element, to allow migration of historical information of processing the data packet by the MEC platform A to the MEC platform (for example, an MEC platform B) corresponding to the DNAI corresponding to the second user plane function network element, so that the MEC platform B can process the data packet with reference to the historical information of processing the data packet by the MEC platform A. If the application function network element allows the migration, the session management function network element may determine that the first user plane function network element can forward the data packet to the second user plane function network element.

In an optional implementation, the method further includes: receiving first indication information from the session management function network element, where the first indication information indicates the first user plane function network element to send a data packet to the second user plane function network element. In this implementation, the session management function network element indicates the first user plane function network element to forward the data packet, so that a packet forwarding process can be performed under control of a core network.

In an optional implementation, the method further includes: receiving a session modification request from the session management function network element, where the session modification request is used to request the first user plane function network element to allocate a tunnel identifier to a first tunnel, the first tunnel is a tunnel used to transmit a data packet between the first user plane function network element and the second user plane function network element, the session modification request includes a first identifier, and the first identifier is a tunnel identifier allocated by the second user plane function network element to the first tunnel; sending a second identifier to the session management function network element, where the second identifier is the tunnel identifier allocated by the first user plane function network element to the first tunnel; and establishing the first tunnel based on the first identifier and the second identifier. In this implementation, the tunnel identifier may be transmitted between the first user plane function network element and the second user plane function network element by using the session management function network element, to establish the first tunnel (for example, the N9 tunnel). In addition, that the N9 tunnel is established by using the session management function network element complies with a specification of a current protocol and has better compatibility.

In an optional implementation, the method further includes: sending a tunnel establishment request to the second user plane function network element, where the tunnel establishment request includes a second identifier, the second identifier is a tunnel identifier allocated by the first user plane function network element to a first tunnel, and the first tunnel is a tunnel used to transmit a data packet between the first user plane function network element and the second user plane function network element; receiving a first identifier from the second user plane function network element, where the first identifier is a tunnel identifier allocated by the second user plane function network element to the first tunnel; and establishing the first tunnel based on the first identifier and the second identifier. In this implementation, the first user plane function network element and the second user plane function network element may directly transmit (for example, transmit by using a general packet radio service tunneling protocol (general packet radio service tunneling protocol, GTP)) the tunnel identifier, to establish the first tunnel (for example, the N9 tunnel), thereby reducing an interaction process of network elements.

In an optional implementation, the method further includes: receiving a first request from the session management function network element, where the first request is used to request the first user plane function network element to report first information after receiving a data packet from the terminal device, the first information includes a DNAI and/or an address, and the first information is used to determine the second user plane function network element. In this implementation, the session management function network element can determine a next-hop user plane function network element selected when the first user plane function network element performs routing and forwarding, and the next-hop user plane function network element may be a next hop of the first user plane function network element, or may be a next hop of a base station, and can further perform corresponding processing, for example, requesting to establish a tunnel (for example, the N9 tunnel) between the first user plane function network element and the next-hop user plane function network element to forward a data packet, requesting the base station to establish a tunnel (for example, the N3 tunnel) between the base station and the next-hop user plane function network element, or determining whether the data packet can be forwarded to the next-hop user plane function network element.

In an optional implementation, the method further includes: sending a registration request to the network repository function network element, where the registration request includes one or more pieces of the following information: a data network name (data network name, DNN) corresponding to the first user plane function network element and single network slice selection assistance information (single network slice selection assistance information, S-NSSAI) corresponding to the first user plane function network element; or second indication information, indicating that the first user plane function network element has a computational power routing capability, where the computational power routing capability is used by the first user plane function network element to forward a data packet of an application based on a resource required by the application. In this implementation, the network repository function network element may prestore and store a DNN and/or S-NSSAI corresponding to a user plane function network element having the computational power routing capability. Therefore, the first user plane function network element may indirectly report, to the network repository function network element by using the DNN and/or S-NSSAI corresponding to the first user plane function network element, that the first user plane function network element has the computational power routing capability, or may directly report, to the network repository function network element by using the second indication information, that the first user plane function network element has the computational power routing capability. An indication manner is flexible, and a network side can further be enabled to determine the capability of the first user plane function network element.

According to a second aspect, an embodiment of this application further provides a communication method. The method may be performed by a session management function network element, or may be performed by a chip system. The chip system can implement a function of the session management function network element. The method includes: sending a first request to a first user plane function network element, where the first request is used to request the first user plane function network element to report first information after receiving a data packet from a terminal device, the first information includes a DNAI and/or an address, the first information is used to determine a second user plane function network element, and the data packet corresponds to a first application; receiving a first DNAI and/or an address of the second user plane function network element from the first user plane function network element, where the first DNAI is one of at least one DNAI, the at least one DNAI is a DNAI corresponding to the first application, and the second user plane function network element corresponds to the first DNAI; and establishing, based on the first DNAI and/or the address of the second user plane function network element, a tunnel used to transmit a data packet.

In an optional implementation, the method further includes: sending the first DNAI to a network repository function network element; receiving the address of the second user plane function network element from the network repository function network element; and sending the address of the second user plane function network element to the first user plane function network element.

In an optional implementation, the method further includes: sending a second request to an application function network element, where the second request is used to request to migrate context information that is of the first application and that corresponds to a second DNAI to the first DNAI, the second DNAI is a DNAI other than the first DNAI in the at least one DNAI, the context information includes historical information of the first application, and the second request includes the first DNAI; receiving a first response from the application function network element, where the first response indicates that the context information that is of the first application and that corresponds to the second DNAI is allowed to be migrated to the first DNAI.

In an optional implementation, the second request further includes third indication information, indicating that the first DNAI is determined from the at least one DNAI based on a resource required by the first application.

In an optional implementation, first indication information is sent to the first user plane function network element, where the first indication information indicates the first user plane function network element to send a data packet to the second user plane function network element.

In an optional implementation, establishing, based on the first DNAI and/or the address of the second user plane function network element, the tunnel used to transmit a data packet includes: establishing a first tunnel based on the first DNAI and/or the address of the second user plane function network element, where the first tunnel is a tunnel used to transmit a data packet between the first user plane function network element and the second user plane function network element; establishing a second tunnel based on the first DNAI and/or the address of the second user plane function network element, where the second tunnel is a tunnel used to transmit a data packet between an access network device and the second user plane function network element.

In an optional implementation, establishing the first tunnel based on the first DNAI and/or the address of the second user plane function network element includes: sending a third request to the second user plane function network element, where the third request is used to request the second user plane function network element to allocate a tunnel identifier to the first tunnel; receiving a first identifier from the second user plane function network element, where the first identifier is the tunnel identifier allocated by the second user plane function network element to the first tunnel; sending a session modification request to the first user plane function network element, where the session modification request is used to request the first user plane function network element to allocate a tunnel identifier to the first tunnel, and the session modification request includes the first identifier; receiving a second identifier from the first user plane function network element, where the second identifier is the tunnel identifier allocated by the first user plane function network element to the first tunnel; and sending the second identifier to the second user plane function network element.

In an optional implementation, establishing the second tunnel based on the first DNAI and/or the address of the second user plane function network element includes: sending a fourth request to the second user plane function network element, where the fourth request is used to request the second user plane function network element to allocate a tunnel identifier to the second tunnel; receiving a third identifier from the second user plane function network element, where the third identifier is the tunnel identifier allocated by the second user plane function network element to the second tunnel; sending the third identifier to an access and mobility management function network element; receiving a fourth identifier from the access and mobility management function network element, where the fourth identifier is a tunnel identifier allocated by the access network device to the second tunnel; and sending the fourth identifier to the second user plane function network element.

In an optional implementation, the method further includes: receiving a session establishment request from the terminal device, where the session establishment request is used to request the session management function network element to establish a first session, and the first session is used by the terminal device to access the first application; sending a discovery request to the network repository function network element, where the discovery request is used to request the network repository function network element to discover a user plane function network element having a computational power routing capability, and the computational power routing capability is used by the user plane function network element to forward a data packet of an application based on a resource required by the application; and receiving a discovery response from the network repository function network element, where the discovery response indicates that the first user plane function network element has the computational power routing capability.

In an optional implementation, the session establishment request includes one or more pieces of the following information: a DNN corresponding to the first session, S-NSSAI corresponding to the first session, or fourth indication information, indicating that a data packet transmitted in the first session has a computational power routing requirement.

In an optional implementation, the discovery request includes one or more pieces of the following information: the DNN corresponding to the first session, the S-NSSAI corresponding to the first session, location information of the terminal device, or fifth indication information, indicating the network repository function network element to discover the user plane function network element having the computational power routing capability.

For technical effects brought by the second aspect or some optional implementations, refer to descriptions of technical effects brought by the first aspect or the corresponding implementations.

According to a third aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods in the first aspect and the second aspect. The memory may be a volatile or non-volatile memory, for example, a cache in a semiconductor chip.

According to a fourth aspect, an embodiment of this application provides a communication apparatus. The apparatus may be a user plane function network element or a session management function network, or may be a chip used for the user plane function network element or the session management function network. The apparatus has a function of implementing any one of the implementation methods of the first aspect and the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or means (means) configured to perform steps of any one of the implementation methods in the first aspect and the second aspect.

According to a sixth aspect, an embodiment of this application provides a communication apparatus, including a processor and an interface circuit. The processor is configured to communicate with another apparatus through the interface circuit, and perform any one of the implementation methods in the first aspect and the second aspect. In addition, the processor may be one or more processors.

According to a seventh aspect, an embodiment of this application provides a communication apparatus, including a processor coupled to a memory. The processor is configured to invoke a program stored in the memory, to perform any one of the implementation methods in the first aspect and the second aspect. The memory may be located inside or outside the apparatus. In addition, the processor may alternatively be one or more processors.

According to an eighth aspect, an embodiment of this application further provides a computer-readable storage medium. The computer-readable storage medium stores instructions, and when the instructions are run on a communication apparatus, any one of the implementation methods in the first aspect and the second aspect is enabled to be performed.

According to a ninth aspect, an embodiment of this application further provides a computer program product. The computer program product includes a computer program or instructions. When the computer program or the instructions are run by a communication apparatus, any one of the implementation methods in the first aspect and the second aspect is enabled to be performed.

According to a tenth aspect, an embodiment of this application further provides a chip system, including a processor, configured to perform any one of the implementation methods in the first aspect and the second aspect.

### BRIEF DESCRIPTION OF DRAWINGS

FIG. 1A and FIG. 1B are diagrams of two network architectures according to embodiments of this application;
FIG. 2A is a diagram of a network architecture according to an embodiment of this application;
FIG. 2B is a diagram of another network architecture according to an embodiment of this application;
FIG. 2C and FIG. 2D are diagrams of two communication scenarios according to embodiments of this application;
FIG. 3 is a flowchart of a communication method according to an embodiment of this application;
FIG. 4A and FIG. 4B, FIG. 5, FIG. 6, FIG. 7, and FIG. 8A and FIG. 8B are flowcharts of five communication methods according to embodiments of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)", "one or more of", or a similar expression refers to any combination of these items, including a single item (piece) or any combination of a plurality of items (pieces). For example, at least one of a, b, or c, or one or more of a, b, or c, represents a, b, c, a and b, a and c, b and c, or a, b, and c. Each of a, b, or c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of objects. In addition, step numbers in embodiments described in embodiments of this application are merely intended to distinguish between different steps, but are not intended to limit a sequence of the steps. For example, S301 may be performed before S302, may be performed after S302, or may be performed simultaneously with S302.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios, for example, including but not limited to the following scenarios: cellular communication, device-to-device (device-to-device, D2D) communication, V2X, machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self driving), remote medical (remote medical), a smart grid (smart grid), smart furniture, a smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be mounted in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is UE is used for description in embodiments of this application.

(2) A network device in embodiments of this application includes, for example, an access network device and/or a core network device. The access network device is a device having a wireless transceiver function, and is configured to communicate with the terminal device. The access network device includes, but is not limited to, a base station (base transceiver station (base transceiver station, BTS), a NodeB, an eNodeB/eNB, or a gNodeB/gNB), a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, and a wireless backhaul node. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following provides descriptions by using an example in which the access network device is the base station. The base station may communicate with the terminal device, or may communicate with the terminal device through a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (the 5th generation, 5G) mobile communication system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

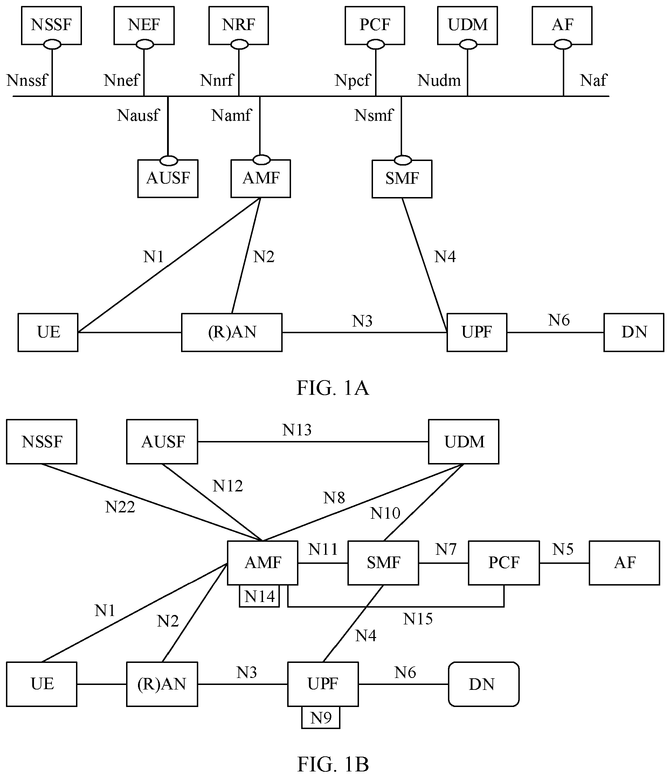

FIG. 1A is a diagram of a 5G network architecture based on a service-based architecture. The network architecture is also a network architecture to which embodiments of this application are applied. The 5G network architecture shown in FIG. 1A may include three parts: a UE part, a data network (data network, DN) part, and an operator network part.

The operator network may include one or more of the following network elements: an authentication server function (authentication server function, AUSF) network element, a network exposure function (network exposure function, NEF) network element, a PCF network element, a unified data management (unified data management, UDM) network element, a unified data repository (unified data repository, UDR), a network repository function (network repository function, NRF) network element, an application function (application function, AF) network element, an AMF network element, an SMF network element, a (radio) access network (radio access network, (R)AN), a UPF network element, or the like.

The operator network includes the radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, an NSSF, the NEF, the NRF, the UDM, the PCF, the AF, or the like.

The user plane network element (such as the UPF) is mainly responsible for packet data packet forwarding, quality of service (quality of service, QoS) control, charging information statistics collection, and the like. The control plane network element is mainly responsible for service procedure interaction, and delivering a data packet forwarding policy, a QoS control policy, and the like to a user plane.

A control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two ends of the interface during communication.

Functions of the network elements in the core network are described as follows:

The UPF supports all or some of the following functions: interconnection between a protocol data unit (protocol data unit, PDU) session and a data network, packet routing and forwarding (for example, supporting uplink classifier (uplink classifier) on traffic and forwarding the traffic to the data network, and supporting a branching point (branching point) to support a multi-homed (multi-homed) PDU session), or data packet detection.

The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like. The SMF is responsible for selecting or reselecting a UPF, allocating an internet protocol (Internet protocol, IP) address, and establishing, modifying, and releasing a bearer.

The NEF exposes a network function to a third party through a northbound application programming interface (application programming interface, API).

The NRF provides a storage function and a selection function of network function entity information for another network element.

The UDM manages user subscription context, is responsible for managing subscription data of the UE, and notifies a corresponding network element when the subscription data is modified.

The UDR has a unified data repository function, and is responsible for storing and retrieving subscription data, policy data, and common architecture data, so that a network element such as the UDM, the PCF, or the NEF can obtain related data. The UDR can provide different data access authentication mechanisms for different types of data (for example, the subscription data and the policy data), to ensure data access security. The UDR needs to be capable of returning a failure response with an appropriate cause value for an invalid service-based operation or data access request.

The PCF performs user policy management, and is configured to generate and manage users, sessions, and QoS flow handling policies.

The AF performs application management, and provides a specific application layer service for the UE. When providing the service for the UE, the AF has requirements on a QoS (policy (policy)) and a charging (charging) policy and needs to notify the network. In addition, the AF also needs the core network to feed back application-related information.

Related interfaces between the network element functions in embodiments of this application include:
N1: is an interface between the UE and the control plane of the core network.
N2: is a communication interface between the (R)AN and the control plane of the core network.
N3: is a communication interface between the (R)AN and the UPF, and is configured to transmit user plane data.
N4: is a communication interface between the SMF and the UPF, and is used by the SMF to perform policy configuration and the like on the UPF.
N6: is a communication port between the UPF and the DN.

FIG. 1B is a diagram of a 5G network architecture based on a point-to-point interface. The network architecture is another network architecture to which embodiments of this application are applied. For network elements in FIG. 1B, refer to descriptions of related network elements in FIG. 1A. A main difference between FIG. 1B and FIG. 1A lies in that an interface between the network elements in FIG. 1B is a point-to-point interface instead of a service-based interface.

(3) Computing first network (computing first network, CFN) is a new information infrastructure that allocates and flexibly schedules compute, storage, and network resources among a cloud computing side, an edge computing side, and a terminal side on demand. A purpose of the CFN is to select an optimal path and an optimal compute node for a data flow in a forwarding process, and select an optimal path in a backhaul process.

CFN dynamic anycast (dynamic anycast, Dyncast) is a key technology at a control layer or a routing layer of the CFN, distributes computational power information of compute nodes through network protocols, and provides optimal computational power allocation and network connection for users based on network information.

(4) Multi-access edge computing (multi-access edge computing, MEC): is cloud computing at an edge of a network, in which computational power is deployed closer to a user, to reduce network latency and provide computational power and applications for a user nearby, thereby greatly enhancing service experience.

The UPF network element in the 5G network is a key network element for convergence of the MEC and the 5G network. The MEC is mainly responsible for performing computation on a data packet forwarded by the UPF network element. For example, the UPF network element may be connected to a data center (namely, an MEC platform) of the MEC through an N6 interface, and the UPF network element may forward, to the MEC platform, a data packet for accessing a specific application, so that an application server that supports the application and that is deployed on the MEC platform can process the data packet.

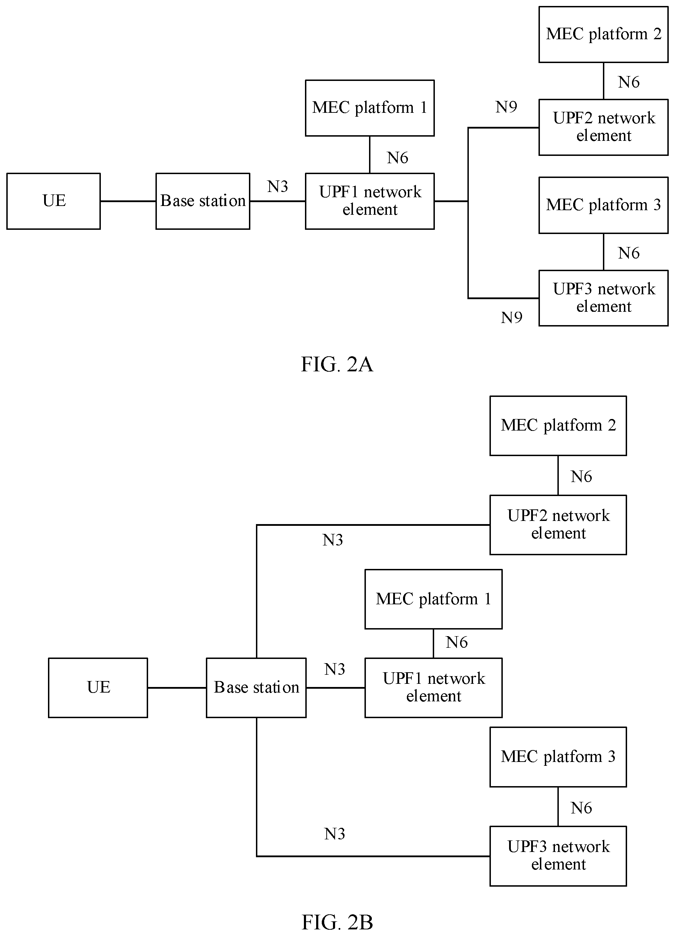

FIG. 2A is a diagram of a network architecture according to an embodiment of this application. A 5G network is used as an example. The network architecture shown in FIG. 2A may include UE, a base station, three UPF network elements (a UPF1 network element, a UPF2 network element, and a UPF3 network element), and three MEC platforms (an MEC platform 1, an MEC platform 2, and an MEC platform 3). The base station may be connected to the UPF1 network element through an N3 interface, and the UPF1 network element may be connected to the UPF2 network element and the UPF3 network element through an N9 interface. The UPF1 network element, the UPF2 network element, and the UPF3 network element may be respectively connected to the MEC platform 1, the MEC platform 2, and the MEC platform 3 through an N6 interface.

FIG. 2B is a diagram of another network architecture according to an embodiment of this application. A 5G network is used as an example. The network architecture shown in FIG. 2B may include UE, a base station, three UPF network elements (a UPF1 network element, a UPF2 network element, and a UPF3 network element), and three MEC platforms (an MEC platform 1, an MEC platform 2, and an MEC platform 3). That the base station may be connected to any one of the UPF1 network element, the UPF2 network element, and the UPF3 network element through the N3 interface may be understood as that the base station is connected to one UPF network element through the N3 interface. The UPF1 network element, the UPF2 network element, and the UPF3 network element may be respectively connected to the MEC platform 1, the MEC platform 2, and the MEC platform 3 through an N6 interface.

It should be understood that, only for ease of understanding, FIG. 2A or FIG. 2B shows an example of a network architecture, but this should not constitute any limitation on this application. The network architecture may further include more UPF network elements, or may include more MEC platforms. MEC platforms interacting with different UPF network elements may be a same MEC platform, or may be different MEC platforms. A quantity of MEC platforms that interact with different UPF network elements may be the same or may be different. This is not limited in embodiments of this application.

The following describes the method provided in embodiments of this application with reference to the accompanying drawings. Embodiments of this specification may be applied to the network architecture shown in FIG. 1A or FIG. 1B. For example, the UPF network element described in embodiments of this specification may be the UPF network element in FIG. 1A or FIG. 1B; the SMF network element described in embodiments of this specification may be the SMF network element in FIG. 1A or FIG. 1B; the NRF network element described in embodiments of this specification may be the NRF network element in FIG. 1A or FIG. 1B; the AF network element described in embodiments of this specification may be the AF network element in FIG. 1A or FIG. 1B, and the AMF network element described in embodiments of this specification may be the AMF network element in FIG. 1A or FIG. 1B.

Embodiments of this specification may also be applied to the network architecture shown in FIG. 2A or FIG. 2B. For example, the base station described in embodiments of this specification may be the base station in FIG. 2A or FIG. 2B; the UPF network element described in embodiments of this specification may be the UPF network element in FIG. 2A or FIG. 2B; and the MEC platform described in embodiments of this specification may be the MEC platform in FIG. 2A or FIG. 2B.

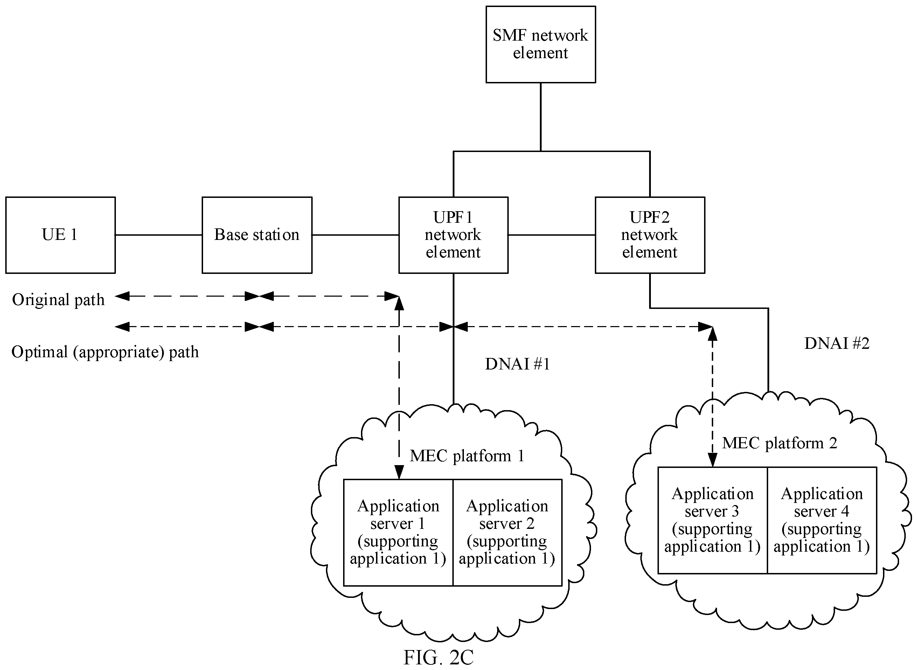

FIG. 2C is a diagram of a communication scenario according to an embodiment of this application. It should be understood that the scenario shown in FIG. 2C may be applied to the network architecture in FIG. 2A. In this scenario, a UPF1 network element and a UPF2 network element may periodically synchronize, by using a border gateway protocol (border gateway protocol, BGP) protocol, resources of MEC platforms corresponding to data network access identifiers (data network access identifiers, DNAIs) respectively corresponding to the UPF1 network element and the UPF2 network element. For example, the UPF1 network element may obtain resources of an MEC platform 2 corresponding to a DNAI #2 corresponding to the UPF2 network element, and the resources of the MEC platform 2 may be resources (for example, computational power resources) of an application server 3 (supporting an application 1) and an application server 4 (supporting an application 2) that are deployed on the MEC platform 2. After receiving a data packet 1 that is used to access the application 1 and that is from UE 1, the UPF 1 network element may perform computational power routing, and determine that an application server that supports the application 1 and that has an optimal (or appropriate) computational power resource is an application server 3. The UPF1 network element may report, to an SMF network element, the DNAI #2 and/or an address (for example, an internet protocol (internet protocol, IP) address) of the UPF2 network element corresponding to the DNAI #2. The SMF network element may determine, based on the DNAI #2 and/or the address of the UPF2 network element corresponding to the DNAI #2, an optimal (or appropriate) path (for example, the UE1, a base station, the UPF1 network element, the UPF2 network element, and the application server 3 deployed on the MEC platform 2) used to transmit the data packet 1. The SMF network element or the UPF1 network element may establish an N9 tunnel used to transmit the data packet 1 between the UPF1 network element and the UPF2 network element, so that the UPF1 network element may forward the data packet 1 to the UPF2 network element. Compared with an original path (for example, the UE1, the base station, the UPF1 network element, and the application server 1 deployed on the MEC platform 1) used to transmit the data packet 1 when the UPF1 network element does not perform computational power routing, the optimal (or appropriate) path considers whether a computational power resource of an application server deployed on an MEC platform can process a data packet in a timely manner, thereby reducing a delay of accessing an application by UE.

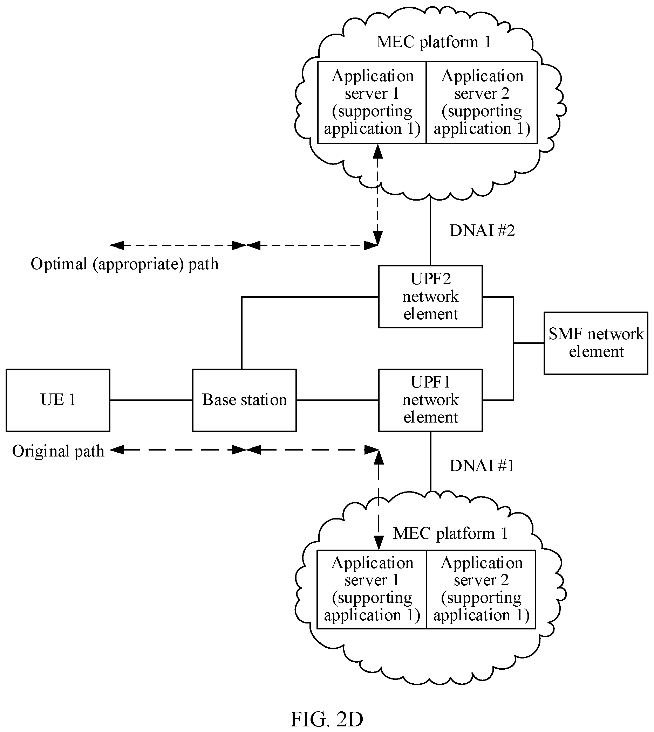

FIG. 2D is a diagram of another communication method according to an embodiment of this application. It should be understood that the scenario shown in FIG. 2D may be applied to the network architecture in FIG. 2B. In this scenario, a UPF1 network element and a UPF2 network element may periodically synchronize, by using a BGP protocol, resources of MEC platforms corresponding to DNAIs respectively corresponding to the UPF1 network element and the UPF2 network element. For example, the UPF1 network element may obtain resources of an MEC platform 2 corresponding to a DNAI #2 corresponding to the UPF2 network element, and the resources of the MEC platform 2 may be resources (for example, computational power resources) of an application server 3 (supporting an application 1) and an application server 4 (supporting an application 2) that are deployed on the MEC platform 2. After receiving a data packet 1 that is used to access the application 1 and that is from UE 1, the UPF1 network element may perform computational power routing, and determine that an application server that supports the application 1 and that has an optimal (or appropriate) computational power resource is an application server 3. The UPF1 network element may report, to an SMF network element, the DNAI #2 and/or the address of the UPF2 network element corresponding to the DNAI #2. The SMF network element may determine, based on the DNAI #2 and/or the address of the UPF2 network element corresponding to the DNAI #2, an optimal (or appropriate) path used to transmit the data packet 1 (for example, the UE 1, a base station, the UPF2 network element, and the application server 3 deployed on the MEC platform 2). The SMF network element may establish an N3 tunnel used to transmit the data packet 1 between the base station and the UPF2 network element, and switch an N3 tunnel used to transmit the data packet 1 between the base station and the UPF1 network element to the N3 tunnel used to transmit the data packet 1 between the base station and the UPF2 network element, so that the base station can forward the data packet 1 to the UPF2 network element. Compared with an original path (for example, the UE1, the base station, the UPF1 network element, and the application server 1 deployed on the MEC platform 1) used to transmit the data packet 1 when the UPF1 network element does not perform computational power routing, the optimal (or appropriate) path considers whether a computational power resource of an application server deployed on an MEC platform can process a data packet in a timely manner, thereby reducing a delay of accessing an application by UE.

In the accompanying drawings corresponding to embodiments of this application, all steps represented by dashed lines are optional steps.

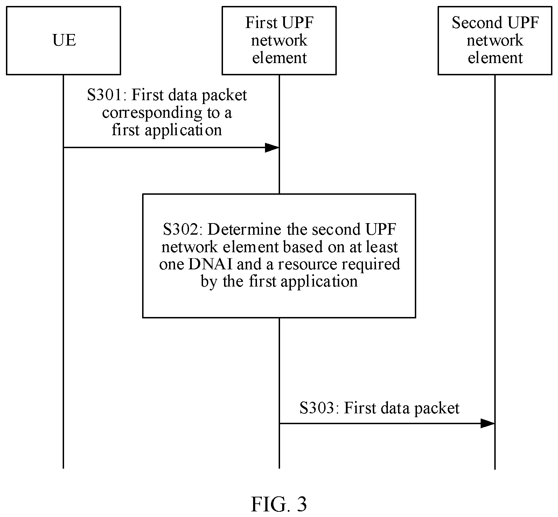

An embodiment of this application provides a communication method. FIG. 3 is a flowchart of the method. The method may be applied to the network architecture in FIG. 2A or FIG. 2B, and is not limited. The method may be applied to the communication scenario in FIG. 2C or FIG. 2D, and is not limited. In the embodiment shown in FIG. 3, an example in which a first UPF network element is a UPF1 network element and a second UPF network element is a UPF2 network element or a UPF3 network element is used.

S301: UE sends a first data packet to the first UPF network element, and correspondingly, the first UPF network element receives the first data packet from the UE. The first data packet corresponds to a first application.

An N3 tunnel is established between a base station and the first UPF network element, and the UE may send the first data packet to the first UPF network element through the base station.

In a possible implementation, before the UE sends the first data packet to the first UPF network element, the UE, an SMF network element, and an NRF network element may perform the following steps.

Step A1: The UE sends a session establishment request to the SMF network element, and correspondingly, the SMF network element receives the session establishment request from the UE.

The session establishment request may be used to request the SMF network element to establish a first session, and the first session may be used by the UE to access the first application. The session establishment request may include but is not limited to one or more pieces of the following information: a DNN corresponding to the first session, S-NSSAI corresponding to the first session, or indication information 1. The indication information 1 may also be referred to as fourth indication information. The indication information 1 may indicate that a data packet transmitted in the first session has a computational power routing requirement. The computational power routing requirement may be that a network device (for example, a UPF network element) needs to forward a data packet of an application based on a resource (for example, a computational power resource) required by the application. The resource required by the application may be a computational power resource of an application server that supports the application and that is deployed on an MEC platform, for example, a quantity of connected users and/or central processing unit (central processing unit, CPU) load of the application server.

Step A2: The SMF network element sends a discovery request to the NRF network element, and correspondingly, the NRF network element receives the discovery request from the SMF network element.

The discovery request may be an Nnrf_NFDiscovery _Request message. The discovery request may be used to request the NRF network element to discover a UPF network element having a computational power routing capability. The discovery request may include but is not limited to one or more pieces of the following information: the DNN corresponding to the first session, the S-NSSAI corresponding to the first session, location information of the UE, or indication information 2. The indication information 2 may also be referred to as fifth indication information. The indication information 2 may indicate the NRF network element to discover the UPF network element having the computational power routing capability. The computational power routing capability may be used to forward the data packet of the application based on the resource (for example, the computational power resource) required by the application. Optionally, the computational power routing capability may be a CFN routing capability (for example, CFN Dyncast).

Step A3: The NRF network element sends a discovery response to the SMF network element, and correspondingly, the SMF network element receives the discovery response from the NRF network element.

The discovery response may be an Nnrf_NFDiscovery _Response message. The discovery response may include an address of the first UPF network element. Optionally, the discovery response may further include indication information that may indicate that the first UPF network element has the computational power routing capability, so that the SMF network element may select the first UPF network element to forward the data packet transmitted in the first session.

In a possible implementation, before the NRF network element sends the discovery response to the SMF network element, the first UPF network element and the NRF network element may perform the following steps: The first UPF network element sends a registration request to the NRF network element, and correspondingly, the NRF network element receives the registration request from the first UPF network element.

The registration request may be an Nnrf_NFManagement_ NFRegister Request message. The registration request may include but is not limited to one or more of the following information: a DNN corresponding to the first UPF network element, S-NSSAI corresponding to the first UPF network element, or indication information 3. The indication information 3 may also be referred to as second indication information. The indication information 3 may indicate that the first UPF network element has the computational power routing capability.

Step A4: The SMF network element sends a session establishment response to the UE, and correspondingly, the UE receives the session establishment response from the SMF network element. The session establishment response may indicate that the first session is successfully established.

S302: The first UPF network element determines the second UPF network element based on at least one DNAI and a resource required by the first application. The at least one DNAI is a DNAI corresponding to the first application, and the second UPF network element corresponds to a first DNAI in the at least one DNAI.

In 301 described above, the first UPF network element may receive a first data packet that corresponds to the first application and that is from the UE. If the first UPF network element directly forwards the first data packet to an MEC platform corresponding to the first UPF network element, so that an application server that supports the first application and that is deployed on the MEC platform processes the first data packet, because the first UPF network element does not consider a computational power resource of the application server that supports the first application and that is deployed on the MEC platform, it may possibly occur that the first data packet cannot be processed in a timely manner because the computational power resource of the application server that supports the first application and that is deployed on the MEC platform is insufficient. Consequently, a delay of accessing the first application by the UE is long. Therefore, to reduce the delay of accessing the first application by the UE, when forwarding the first data packet to the application server supporting the first application, the first UPF network element may consider whether a computational power resource of each application server supporting the first application can process the first data packet in a timely manner. In this way, the delay of accessing the first application by the UE is reduced.

Specifically, S302 includes S302a and S302b.

S302a: The first UPF network element determines the first DNAI based on the at least one DNAI and the resource required by the first application.

The at least one DNAI is a DNAI corresponding to the first application, and the DNAI corresponding to the first application may be a DNAI corresponding to a deployment location of the first application. For example, if an application server #1 supporting the first application is deployed on an MEC platform corresponding to a DNAI #1, the DNAI #1 is one DNAI corresponding to the first application. The resource required by the first application may be a computational power resource of an application server that supports the first application and that is deployed on the MEC platform corresponding to the DNAI corresponding to the first application. For example, if the application server #1 supporting the first application is deployed on the MEC platform corresponding to the DNAI #1, the resource required by the first application corresponding to the DNAI #1 is a computational power resource of the application server #1. The first DNAI may be a DNAI corresponding to an application server that supports the first application and that has an optimal (or appropriate) computational power resource.

In a possible implementation, a plurality of UPF network elements may periodically synchronize, by using a BGP protocol, resources of MEC platforms corresponding to DNAIs respectively corresponding to the plurality of UPF network elements. In other words, the first UPF network element may obtain, from another UPF network element by using the BGP protocol, a resource of an MEC platform corresponding to a DNAI corresponding to the another UPF network element. One DNAI may correspond to at least one UPF network element. Therefore, one UPF network element may obtain, from each UPF network element corresponding to one DNAI, a resource of an MEC platform corresponding to the DNAI, or may obtain, from one UPF network element corresponding to one DNAI, a resource of an MEC platform corresponding to the DNAI.

For example, the first UPF network element may obtain, by using the BGP protocol, resources of MEC platforms corresponding to a DNAI #1, a DNAI #2, and a DNAI #3 shown in Table 1. An application server #1 (supporting an application #1) and an application server #2 (supporting an application #2) are deployed on the MEC platform corresponding to the DNAI #1, an application server #3 (supporting the application #1), an application server #4 (supporting the application #2), and an application server #5 (supporting an application #3) are deployed on the MEC platform corresponding to the DNAI #2, and an application server #6 (supporting the application #1) is deployed on the MEC platform corresponding to the DNAI #3. Therefore, resources of the MEC platforms corresponding to the DNAI #1, the DNAI #2, and the DNAI #3 corresponding to deployment locations of the application #1 may be respectively a quantity of users who have accessed the application server #1 and/or CPU load, a quantity of users who have accessed the application server #3 and/or CPU load, and a quantity of users who have accessed the application server #6 and/or CPU load, resources of the MEC platforms corresponding to the DNAI #1 and the DNAI #2 corresponding to deployment locations of the application #2 may be respectively a quantity of users who have accessed the application server #2 and/or CPU load, and a quantity of users who have accessed the application server #4 and/or CPU load, and resources of the MEC platform corresponding to the DNAI #2 corresponding to a deployment location of the application #3 may be a quantity of users who have accessed the application server #5 and/or CPU load.

After the first UPF network element receives, from the UE, a data packet 1 for accessing the application #1, the first UPF network element may determine, based on the resources of the MEC platforms corresponding to the DNAI #1, the DNAI #2, and the DNAI #3 corresponding to the deployment locations of the application #1, an application server that has an optimal (or appropriate) computational power resource from the application server #1, the application server #3, and the application server #6 that support the application #1, and determine a DNAI corresponding to the application server that has the optimal (or appropriate) computational power resource as the first DNAI.

**Table 1**

| Application type | Application server | DNAI corresponding to a deployment location of an application | Quantity of users | CPU load |
|---|---|---|---|---|
| Application #1 (an anycast address is IP #1) | Application server #1 | DNAI #1 | 40 | 50% |
| Application #2 (an anycast address is IP #1) | Application server #2 | DNAI #1 | 20 | 28% |
| Application #1 (an anycast address is IP #1) | Application server #3 | DNAI #2 | 80 | 70% |
| Application #2 (an anycast address is IP #1) | Application server #4 | DNAI #2 | 40 | 50% |
| Application #3 (an anycast address is IP #1) | Application server #5 | DNAI #2 | 100 | 90% |
| Application #1 (an anycast address is IP #1) | Application server #6 | DNAI #3 | 60 | 40% |

S302b: The first UPF network element obtains an address of the second UPF network element.

The second UPF network element may correspond to the first DNAI. The address of the second UPF network element may be an internet protocol (internet protocol, IP) address of the second UPF network element.

In a first example, the first UPF network element may send the first DNAI to a first network element, and receive the address of the second UPF network element from the first network element. The first network element includes an SMF network element or an NRF network element.

For example, the first UPF network element and the SMF network element may perform the following steps to obtain the address of the second UPF network element:

Step B1: The first UPF network element sends the first DNAI to the SMF network element, and correspondingly, the SMF network element receives the first DNAI from the first UPF network element.

Step B2: The SMF network element sends the address of the second UPF network element to the first UPF network element, and correspondingly, the first UPF network element receives the address of the second UPF network element from the SMF network element.

Optionally, the SMF network element and the NRF network element may perform the following steps to obtain the address of the second UPF network element:
Step C1: The SMF network element sends the first DNAI to the NRF network element, and correspondingly, the NRF network element receives the first DNAI from the SMF network element. The first DNAI may be carried in an Nnrf_NFDiscovery _Request message.
Step C2: The NRF network element sends the address of the second UPF network element to the SMF network element, and correspondingly, the SMF network element receives the address of the second UPF network element from the NRF network element. The address of the second UPF network element may be carried in an Nnrf_NFDiscovery _Response message.

Alternatively, the first UPF network element and the NRF network element may perform the following steps to obtain the address of the second UPF network element:
Step D1: The first UPF network element sends the first DNAI to the NRF network element, and correspondingly, the NRF network element receives the first DNAI from the first UPF network element. The first DNAI may be carried in an Nnrf_NFDiscovery _Request message.
Step D2: The NRF network element sends the address of the second UPF network element to the first UPF network element, and correspondingly, the first UPF network element receives the address of the second UPF network element from the NRF network element. The address of the second UPF network element may be carried in an Nnrf_NFDiscovery _Response message.

In a second example, the first UPF network element determines the address of the second UPF network element based on an address of a UPF network element corresponding to the at least one DNAI. For example, when periodically synchronizing, by using the BGP protocol, the resources of the MEC platforms corresponding to the DNAIs respectively corresponding to the plurality of UPF network elements, the plurality of UPF network elements also synchronize respective addresses.

In a possible implementation, after the first UPF network element obtains the address of the second UPF network element by sending the first DNAI to the NRF network element in the first example, or obtains the address of the second UPF network element by using the second example, the first UPF network element and the SMF network element may perform the following steps: The first UPF network element sends the address of the second UPF network element to the SMF network element, and correspondingly, the SMF network element receives the address of the second UPF network element from the first UPF network element.

In a possible implementation, after the SMF network element receives the discovery response from the NRF network element, the SMF network element may determine that the first UPF network element has a computational power routing capability, in other words, the SMF network element may determine that the first UPF network element can perform computational power routing and forwarding on a data packet from the UE, to satisfy the computational power routing requirement of the data packet transmitted by the UE in the first session. Therefore, the SMF network element and the first UPF network element may perform the following steps: The SMF network element sends a request 1 to the first UPF network element, and correspondingly, the first UPF network element receives the request 1 from the SMF network element. The request 1 may also be referred to as a first request. The request 1 may be an N4 session establishment request. The request 1 may be used to request the first UPF network element to report first information after receiving the data packet from the UE, where the first information includes a DNAI and/or an address, and the first information is used to determine the second user plane function network element. It may be understood as that the request 1 may be used to request the first UPF network element to report information about a next-hop UPF network element after receiving the data packet from the UE. The next-hop UPF network element may be a next hop of the first UPF network element, where tor example, the first UPF network element forwards the data packet to the next-hop UPF network element, or may be a next hop of the base station, where for example, the base station forwards the data packet to the next-hop UPF network element, and the information about the next-hop UPF network element includes a DNAI corresponding to the next-hop UPF network element and/or an address of the next-hop UPF. Therefore, the SMF network element can obtain the DNAI (for example, the first DNAI) corresponding to the next-hop UPF network element and/or the address of the next-hop UPF network element (for example, the second UPF network element) that are determined when the first UPF network element performs computational power routing and forwarding on the first data packet that corresponds to the first application and that is from the UE, to establish a tunnel (namely, an N9 tunnel) used to transmit a data packet between the first UPF network element and the second UPF network element, or establish a tunnel (namely, an N3 tunnel) used to transmit a data packet between the base station and the second UPF network element.

Specifically, after the SMF network element receives the first DNAI and/or the address of the second UPF network element from the first UPF network element, the SMF network element may establish, based on the first DNAI and/or the address of the second UPF network element, the tunnel used to transmit a data packet. The tunnel may be a first tunnel or a second tunnel. The first tunnel may be a tunnel (namely, the N9 tunnel) used to transmit a data packet between the first UPF network element and the second UPF network element. The second tunnel may be a tunnel (namely, the N3 tunnel) used to transmit a data packet between the base station and the second UPF network element.

In an example, the SMF network element, the first UPF network element, and the second UPF network element may perform the following steps to establish the first tunnel:
Step E1: The SMF network element sends a request 2 to the second UPF network element, and correspondingly, the second UPF network element receives the request 2 from the SMF network element. The request 2 may also be referred to as a third request. The request 2 may be an N4 session establishment request. The request 2 may be used to request the second UPF network element to allocate a tunnel identifier to the first tunnel.
Step E2: The second UPF network element sends a first identifier to the SMF network element, and correspondingly, the SMF network element receives the first identifier from the second UPF network element. The first identifier is the tunnel identifier allocated by the second UPF network element to the first tunnel. The first identifier may be carried in an N4 session establishment response.
Step E3: The SMF network element sends a session modification request to the first UPF network element, and correspondingly, the first UPF network element receives the session modification request from the SMF network element. The session modification request may be an N4 session modification request. The session modification request may be used to request the first UPF network element to allocate a tunnel identifier to the first tunnel. The session modification request may include the first identifier.
Step E4: The first UPF network element sends a second identifier to the SMF network element, and correspondingly, the SMF network element receives the second identifier from the first UPF network element. The second identifier is the tunnel identifier allocated by the first UPF network element to the first tunnel. The second identifier may be carried in the N4 session modification response.
Step E5: The SMF network element sends the second identifier to the second UPF network element, and correspondingly, the second UPF network element receives the second identifier from the SMF network element. The second identifier may be carried in the N4 session modification request.
Step E6: The first UPF network element establishes the first tunnel based on the first identifier and the second identifier, and the second UPF network element establishes the first tunnel based on the first identifier and the second identifier.

In still another example, the SMF network element, the second UPF network element, an AMF network element, and the base station may perform the following steps to establish the second tunnel:
Step F1: The SMF network element sends a request 3 to the second UPF network element, and correspondingly, the second UPF network element receives the request 3 from the SMF network element. The request 3 may also be referred to as a fourth request. The request 3 may be an N4 session establishment request. The request 3 may be used to request the second UPF network element to allocate a tunnel identifier to the second tunnel.
Step F2: The second UPF network element sends a third identifier to the SMF network element, and correspondingly, the SMF network element receives the third identifier from the second UPF network element. The third identifier is the tunnel identifier allocated by the second UPF network element to the second tunnel, and the third identifier may be carried in an N4 session establishment response.
Step F3: The SMF network element sends the third identifier to the AMF network element, and correspondingly, the AMF network element receives the third identifier from the SMF network element. The third identifier may be carried in N2 session management (session management, SM) information (information) of an Namf_Communication_N1N2MessageTransfer message.
Step F4: The AMF network element sends the third identifier to the base station, and correspondingly, the base station receives the third identifier from the AMF network element. The third identifier may be carried in N2 SM information of an N2 message.
Step F5: The base station sends a fourth identifier to the AMF network element, and correspondingly, the AMF network element receives the fourth identifier from the base station. The fourth identifier may be carried in N2 SM information of an N2 message.
Step F6: The AMF network element sends the fourth identifier to the SMF network element, and correspondingly, the SMF network element receives the fourth identifier from the AMF network element. The fourth identifier is a tunnel identifier allocated by the base station to the second tunnel, and the fourth identifier may be carried in N2 SM information of an Nsmf_PDUSession_UpdateSMContext message.
Step F7: The SMF network element sends the fourth identifier to the second UPF network element, and correspondingly, the second UPF network element receives the fourth identifier from the SMF network element. The fourth identifier may be carried in an N4 session modification request.
Step F8: The second UPF network element establishes the second tunnel based on the third identifier and the fourth identifier, and the base station establishes the second tunnel based on the third identifier and the fourth identifier.
S303: The first UPF network element sends the first data packet to the second UPF network element, and correspondingly, the second UPF network element receives the first data packet from the first UPF network element.

The tunnel used to transmit a data packet between the first UPF network element and the second UPF network element is the first tunnel, and the first tunnel may be established by transmitting, by the SMF network element, the tunnel identifiers allocated by the first UPF network element and the second UPF network element. In other words, the SMF network element, the first UPF network element, and the second UPF network element perform steps E1 to E6 in the above to establish the first tunnel. Alternatively, the first tunnel may be established by transmitting the tunnel identifiers allocated by the first UPF network element and the second UPF network element by using GTP-C in the general packet radio service tunneling protocol (general packet radio service tunneling protocol, GTP). In other words, the first UPF network element and the second UPF network element perform the following steps to establish the first tunnel:
Step G1: The first UPF network element sends a tunnel establishment request to the second UPF network element, and correspondingly, the second UPF network element receives the tunnel establishment request from the first UPF network element. The tunnel establishment request includes a second identifier.
Step G2: The second UPF network element sends a first identifier to the first UPF network element, and correspondingly, the first UPF network element receives the first identifier from the second UPF network element.
Step G3: The first UPF network element establishes the first tunnel based on the first identifier and the second identifier, and the second UPF network element establishes the first tunnel based on the first identifier and the second identifier.

In a possible implementation, the first UPF network element may be a UPF1 network element, and the second UPF network element may be a UPF2 network element or a UPF3 network element. It may be understood as that the UPF1 network element may send the first data packet to the UPF2 network element or the UPF3 network element. When the UPF1 network element sends the first data packet to the UPF2 network element, an application server that currently has an optimal (or appropriate) computational power resource is an application server that supports the first application and that is deployed on an MEC platform (or a DNAI) corresponding to the UPF2 network element. In this case, the DNAI corresponding to the UPF2 network element may be referred to as the first DNAI. When the UPF1 network element sends the first data packet to the UPF3 network element, an application server that currently has an optimal (or appropriate) computational power resource is an application server that supports the first application and that is deployed on an MEC platform (or a DNAI) corresponding to the UPF3 network element. It may be understood as that as time moves, the application server that currently has the optimal (or appropriate) computational power resource may possibly be updated from the application server that supports the first application and that is deployed on the MEC platform (or the DNAI) corresponding to the UPF2 network element to the application server that supports the first application and that is deployed on the MEC platform (or the DNAI) corresponding to the UPF3 network element. In this case, the DNAI corresponding to the UPF3 network element may be referred to as the first DNAI, and the DNAI corresponding to the UPF2 network element may be referred to as a second DNAI. In other words, the second DNAI is a DNAI other than the first DNAI in the at least one DNAI corresponding to the first application.

For example, an application server #1 (supporting an application #1) is deployed on the MEC platform corresponding to the DNAI #1, an application server #3 (supporting the application #1) is deployed on the MEC platform corresponding to the DNAI #2, and an application server #6 (supporting the application #1) is deployed on the MEC platform corresponding to the DNAI #3. The UPF3 network element corresponds to the DNAI#1, and the UPF2 network element corresponds to the DNAI#2. When an application server having the optimal (or appropriate) computational power resource is the application server #3 corresponding to the DNAI #2, after receiving the data packet 1 for accessing the application #1 from the UE, the UPF1 network element needs to send the data packet 1 for accessing the application #1 to the UPF2 network element. As time moves, the application server having the optimal (or appropriate) computational power resource may possibly be updated from the application server #3 corresponding to the DNAI #2 to the application server #1 corresponding to the DNAI #1. In this case, after receiving the data packet 1 for accessing the application #1 from the UE, the UPF1 network element needs to send the data packet 1 for accessing the application #1 to the UPF3 network element.

Therefore, after the SMF network element receives the first DNAI from the first UPF network element, if the second UPF network element is the UPF3 network element, the SMF network element and an AF network element may perform the following steps to determine whether to migrate context information that is of the first application and that corresponds to the second DNAI to the first DNAI:

Step H1: The SMF network element sends a request 4 to the AF network element, and correspondingly, the AF network element receives the request 4 from the SMF network element.

The request 4 may also be referred to as a second request. The request 4 may be an Nsmf_EventExposure_Notify message. The request 4 may be used to request to migrate the context information that is of the first application and that corresponds to the second DNAI to the first DNAI. The context information of the first application includes historical information of the first application, and the request 4 may include the first DNAI. Optionally, the request 4 may further include indication information 4. The indication information 4 may also be referred to as third indication information. The indication information 4 may indicate that the first DNAI is determined, based on the resource required by the first application, from the at least one DNAI corresponding to the first application.

Step H2: The AF network element migrates the context information that is of the first application and that corresponds to the second DNAI to the first DNAI. For example, an application server that supports the first application and that is deployed on an MEC platform corresponding to the second DNAI is the application server #1, and an application server that supports the first application and that is deployed on an MEC platform corresponding to the first DNAI is the application server #2. The AF network element may determine, based on energy consumption for migration between the application server #1 and the application server #2, whether to migrate context information of the application server #1 to the application server #2.

Step H3: The AF network element sends a response 1 to the SMF network element, and correspondingly, the SMF network element receives the response 1 from the AF network element. The response 1 may also be referred to as a first response. The response 1 may be an Nsmf_EventExposure_AppRelocationInfo message. The response 1 may indicate that the context information that is of the first application and that corresponds to the second DNAI is allowed to be migrated to the first DNAI.

Optionally, if the AF network element does not allow the context information that is of the first application and that corresponds to the second DNAI to be migrated to the first DNAI, the AF network element may send a response 2 to the SMF network element, and correspondingly, the SMF network element receives the response 2 from the AF network element. The response 2 may be an Nsmf_EventExposure_AppRelocationInfo message. The response 2 may be used to allow the context information that is of the first application and that corresponds to the second DNAI to be migrated to a third DNAI. The response 2 may include the third DNAI. A third UPF network element corresponds to the third DNAI.

In a possible implementation, after the SMF network element receives the response 1 from the AF network element, the SMF network element and the first UPF network element may perform the following steps: The SMF network element sends indication information 5 to the first UPF network element, and correspondingly, the first UPF network element receives the indication information 5 from the SMF network element. The indication information 5 may also be referred to as first indication information. The indication information 5 may indicate the first UPF network element to send the first data packet to a UPF network element corresponding to the first DNAI. Optionally, the indication information 5 may indicate the first UPF network element to send the first data packet to the second UPF network element.

Optionally, after the SMF network element receives the response 2 from the AF network element, the SMF network element and the first UPF network element may perform the following steps: The SMF network element sends indication information 6 to the first UPF network element, and correspondingly, the first UPF network element receives the indication information 6 from the SMF network element. The indication information 6 may indicate the first UPF network element to send the first data packet to the third UPF network element.

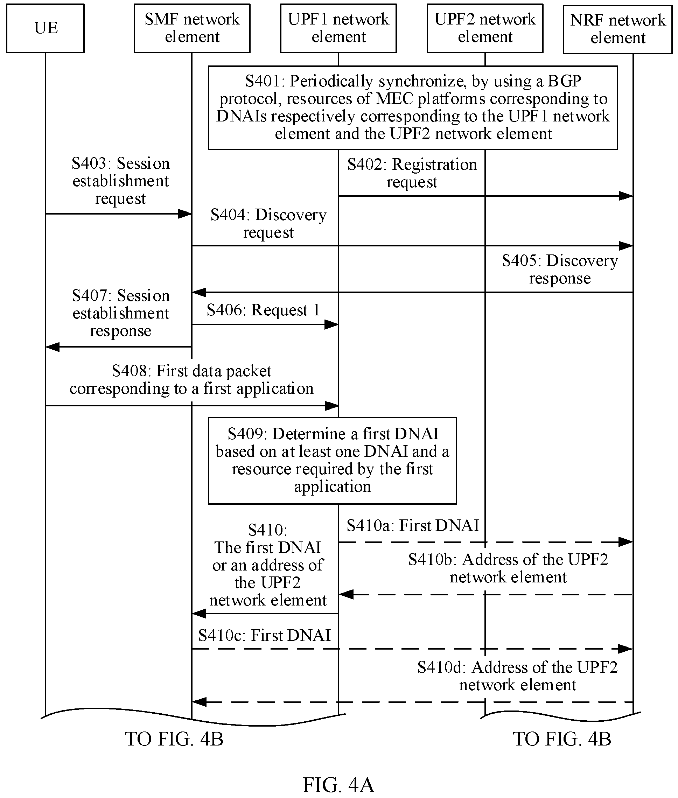

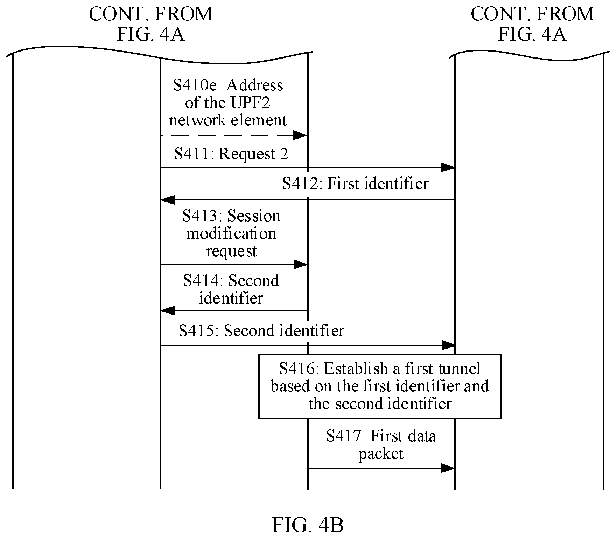

FIG. 4A and FIG. 4B are another schematic flowchart of a communication method according to an embodiment of this application. It should be understood that FIG. 4A and FIG. 4B are an example interaction diagram of the method shown in FIG. 3. This embodiment of this application is not limited thereto. The method shown in FIG. 4A and FIG. 4B may be applied to the network architecture in FIG. 2A. In the embodiment shown in FIG. 4A and FIG. 4B, an example in which a first UPF network element is a UPF1 network element and a second UPF network element is a UPF2 network element is used.

S401: The UPF1 network element and the UPF2 network element periodically synchronize, by using a BGP protocol, resources of MEC platforms corresponding to DNAIs respectively corresponding to the UPF1 network element and the UPF2 network element. Optionally, the UPF1 network element and the UPF2 network element synchronize respective addresses thereof by using the BGP protocol.

For a specific implementation process of S401 in the above, refer to content of S302 in the above. Details are not described again.

S402: The UPF1 network element sends a registration request to an NRF network element, and correspondingly, the NRF network element receives the registration request from the UPF1 network element. The registration request may be an Nnrf_NFManagement_NFRegister Request message. The registration request may include but is not limited to one or more of the following information: a DNN corresponding to the UPF1 network element, S-NSSAI corresponding to the UPF1 network element, or indication information 3. The indication information 3 may indicate that the UPF1 network element has a computational power routing capability.

S403: UE sends a session establishment request to an SMF network element, and correspondingly, the SMF network element receives the session establishment request from the UE. The session establishment request may be used to request the SMF network element to establish a first session, and the first session may be used by the UE to access a first application. The session establishment request may include but is not limited to one or more pieces of the following information: the DNN corresponding to the first session, the S-NSSAI corresponding to the first session, or indication information 1. The indication information 1 may indicate that a data packet transmitted in the first session has a computational power routing requirement.

S404: The SMF network element sends a discovery request to the NRF network element, and correspondingly, the NRF network element receives the discovery request from the SMF network element. The discovery request may be an Nnrf_NFDiscovery _Request message. The discovery request may be used to request the NRF network element to discover a UPF network element having the computational power routing capability. The discovery request may include but is not limited to one or more pieces of the following information: the DNN corresponding to the first session, the S-NSSAI corresponding to the first session, location information of the UE, or indication information 2. The indication information 2 may indicate the NRF network element to discover a UPF network element having a computational power routing capability.

S405: The NRF network element sends a discovery response to the SMF network element, and correspondingly, the SMF network element receives the discovery response from the NRF network element. The discovery response may be an Nnrf_NFDiscovery_Response message. The discovery response includes an address of the UPF1 network element. Optionally, the discovery response further includes indication information that may indicate that the UPF1 network element has the computational power routing capability.

For specific implementation processes of S402 to S405 in the above, refer to content of S301 in the above. Details are not described again.

S406: The SMF network element sends a request 1 to the UPF1 network element, and correspondingly, the UPF1 network element receives the request 1 from the SMF network element. The request 1 may be used to request the UPF1 network element to report information about a next-hop UPF network element after receiving a data packet from the UE, and the next-hop UPF network element is a next hop of the UPF1 network element, where for example, the UPF1 network element forwards the data packet to the next-hop UPF network element, and the information about the next-hop UPF network element includes a DNAI corresponding to the next-hop UPF network element and/or an address of the next-hop UPF network element.

After receiving the discovery response from the NRF network element, the SMF network element may determine that the UPF1 network element has the computational power routing capability. In other words, the SMF network element may determine that the UPF1 network element can perform computational power routing and forwarding on the data packet from the UE, to satisfy the computational power routing requirement of the data packet transmitted by the UE in the first session. Therefore, the SMF network element may send the request 1 to the UPF1 network element, to obtain information about a next-hop forwarding path determined when the UPF1 network element performs computational power routing and forwarding on the first data packet that corresponds to the first application and that is from the UE, where the information about the next-hop forwarding path includes a DNAI (namely, a first DNAI) corresponding to the next-hop UPF network element and/or an address of the next-hop UPF network element (namely, the UPF2 network element), and the next-hop UPF network element is a next hop of the UPF1 network element, for example, the UPF1 network element forwards the data packet to the UPF2 network element.

S407: The SMF network element sends a session establishment response to the UE, and correspondingly, the UE receives the session establishment response from the SMF network element. The session establishment response may indicate that the first session is successfully established.

S408: The UE sends the first data packet corresponding to the first application to the UPF1 network element, and correspondingly, the UPF1 network element receives the first data packet corresponding to the first application from the UE.

For a specific implementation process of S408 in the above, refer to content of S301 in the above. Details are not described again.

S409: The UPF1 network element determines the first DNAI based on at least one DNAI and a resource required by the first application. The at least one DNAI may be a DNAI corresponding to the first application, and the DNAI corresponding to the first application may be a DNAI corresponding to a deployment location of the first application. For example, if an application server supporting the first application is deployed on an MEC platform corresponding to a DNAI #1, the DNAI #1 is one DNAI corresponding to the first application. The resource required by the first application may be a computational power resource of an application server that supports the first application and that is deployed on an MEC platform corresponding to the DNAI corresponding to the first application. The first DNAI may be a DNAI corresponding to the UPF2 network element. The UPF2 network element may be a UPF network element, namely, a next-hop UPF network element, that is required by a next-hop forwarding path and that is determined when the UPF1 network element performs computational power routing and forwarding on the first data packet that corresponds to the first application and that is from the UE. The next-hop UPF network element is a next hop of the UPF1 network element. For example, the UPF1 network element forwards the data packet to the UPF2 network element.

For a specific implementation process of S409 in the above, refer to content of S302 in the above. Details are not described again.

S410: The UPF1 network element sends the first DNAI and/or the address of the UPF2 network element to the SMF network element, and correspondingly, the SMF network element receives the first DNAI and/or the address of the UPF2 network element from the UPF1 network element.

Optionally, when the UPF1 network element sends the address of the UPF2 network element to the SMF network element, before the UPF1 network element sends the address of the UPF2 network element to the SMF network element, S410 in the above further includes the following steps.

S410a: The UPF1 network element sends the first DNAI to the NRF network element, and correspondingly, the NRF network element receives the first DNAI from the UPF1 network element. The first DNAI may be carried in an Nnrf_NFDiscovery _Request message.

S410b: The NRF network element sends the address of the UPF2 network element to the UPF1 network element, and correspondingly, the UPF1 network element receives the address of the UPF2 network element from the NRF network element. The address of the UPF2 network element may be carried in an Nnrf_NFDiscovery_Response message.

Optionally, when the UPF1 network element sends the first DNAI to the SMF network element, after the UPF1 network element sends the first DNAI to the SMF network element, S409 in the above further includes the following steps.

S410c: The SMF network element sends the first DNAI to the NRF network element, and correspondingly, the NRF network element receives the first DNAI from the SMF network element. The first DNAI may be carried in an Nnrf_NFDiscovery _Request message.

S410d: The NRF network element sends the address of the UPF2 network element to the SMF network element, and correspondingly, the SMF network element receives the address of the UPF2 network element from the NRF network element. The address of the UPF2 network element may be carried in an Nnrf_NFDiscovery_Response message.

S410e: The SMF network element sends the address of the UPF2 network element to the UPF1 network element, and correspondingly, the UPF1 network element receives the address of the UPF2 network element from the SMF network element.

S410a to S410e in the above are optional steps, and are represented by dashed lines in FIG. 4A and FIG. 4B.

S411: The SMF network element sends a request 2 to the UPF2 network element, and correspondingly, the UPF2 network element receives the request 2 from the SMF network element. The request 2 may be an N4 session establishment request. The request 2 may be used to request the UPF2 network element to allocate a tunnel identifier to a first tunnel. The first tunnel is a tunnel (namely, an N9 tunnel) used to transmit a data packet between the UPF1 network element and the UPF2 network element.

S412: The UPF2 network element sends a first identifier to the SMF network element, and correspondingly, the SMF network element receives the first identifier from the UPF2 network element. The first identifier may be carried in an N4 session establishment response. The first identifier is the tunnel identifier allocated by the UPF2 network element to the first tunnel.

S413: The SMF network element sends a session modification request to the UPF1 network element, and correspondingly, the UPF1 network element receives the session modification request from the SMF network element. The session modification request may be an N4 session modification request. The session modification request may be used to request the UPF1 network element to allocate a tunnel identifier to the first tunnel. The session modification request may include the first identifier.

S414: The UPF1 network element sends a second identifier to the SMF network element, and correspondingly, the SMF network element receives the second identifier from the UPF1 network element. The second identifier may be carried in the N4 session modification response. The second identifier is the tunnel identifier allocated by the UPF1 network element to the first tunnel.

S415: The SMF network element sends the second identifier to the UPF2 network element, and correspondingly, the UPF2 network element receives the second identifier from the SMF network element. The second identifier may be carried in the N4 session modification response.

S416: The UPF1 network element establishes the first tunnel based on the first identifier and the second identifier, and the UPF2 network element establishes the first tunnel based on the first identifier and the second identifier.

For specific implementation processes of S410, S410a to S410e, and S411 to S416 in the above, refer to content of S302 in the above. Details are not described again.

S417: The UPF1 network element sends the first data packet to the UPF2 network element, and correspondingly, the UPF2 network element receives the first data packet from the UPF1 network element.

For a specific implementation process of S417 in the above, refer to content of S303 in the above. Details are not described again.

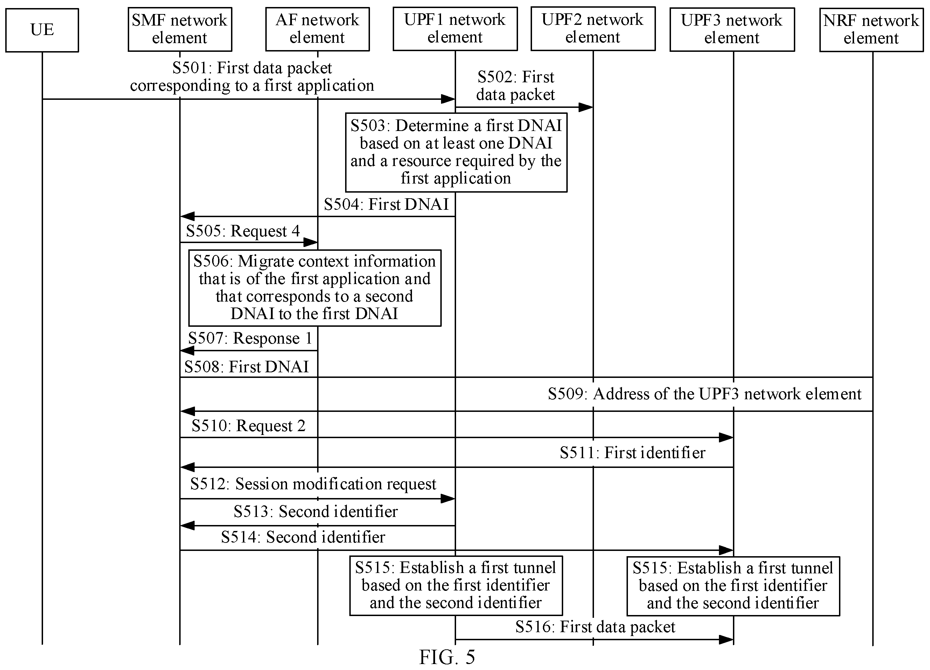

FIG. 5 is another schematic flowchart of a communication method according to an embodiment of this application. It should be understood that FIG. 5 is an example interaction diagram of the method shown in FIG. 3. This embodiment of this application is not limited thereto. The method shown in FIG. 5 may be applied to the network architecture in FIG. 2A. In the embodiment shown in FIG. 5, an example in which a first UPF network element is a UPF1 network element and a second UPF network element is a UPF3 network element is used.

S501: UE sends a first data packet corresponding to a first application to the UPF1 network element, and correspondingly, the UPF1 network element receives the first data packet corresponding to the first application from the UE.

S502: The UPF1 network element sends the first data packet to the UPF2 network element, and correspondingly, the UPF2 network element receives the first data packet from the UPF1 network element.

For specific implementation processes of S501 and S502 in the above, refer to content in FIG. 4A and FIG. 4B in the above. Details are not described again.

S503: The UPF1 network element determines a first DNAI based on at least one DNAI and a resource required by the first application. The at least one DNAI may be a DNAI corresponding to the first application, and the DNAI corresponding to the first application may be a DNAI corresponding to a deployment location of the first application. For example, if an application server supporting the first application is deployed on an MEC platform corresponding to a DNAI #1, the DNAI #1 is one DNAI corresponding to the first application. The resource required by the first application may be a computational power resource of an application server that supports the first application and that is deployed on an MEC platform corresponding to the DNAI corresponding to the first application. The first DNAI may be a DNAI corresponding to the UPF3 network element. The UPF3 network element may be a UPF network element, namely, a next-hop UPF network element, that is required by a next-hop forwarding path and that is determined when the UPF1 network element performs computational power routing and forwarding on the first data packet that corresponds to the first application and that is from the UE. The next-hop UPF network element is a next hop of the UPF1 network element. For example, the UPF1 network element forwards the data packet to the UPF3 network element.

For a specific implementation process of S503 in the above, refer to content of S302 in the above. Details are not described again.

S504: The UPF1 network element sends the first DNAI to an SMF network element, and correspondingly, the SMF network element receives the first DNAI from the UPF1 network element.

For a specific implementation process of S504 in the above, refer to content of S302 in the above. Details are not described again.

S505: The SMF network element sends a request 4 to an AF network element, and correspondingly, the AF network element receives the request 4 from the SMF network element. The request 4 may be an Nsmf_EventExposure_Notify message. The request 4 may be used to request to migrate context information that is of the first application and that corresponds to a second DNAI to the first DNAI. The second DNAI may be a DNAI corresponding to the UPF2 network element in S502 in the above. The request 4 may include the first DNAI. Optionally, the request 4 may further include indication information 4. The indication information 4 may indicate that the first DNAI is determined, based on the resource required by the first application, from at least one DNAI corresponding to the first application.

S506: The AF network element migrates context information that is of the first application and that corresponds to the second DNAI to the first DNAI.

S507: The AF network element sends a response 1 to the SMF network element, and correspondingly, the SMF network element receives the response 1 from the AF network element. The response 1 may be an Nsmf_EventExposure_AppRelocationInfo message. The response 1 may indicate that the context information that is of the first application and that corresponds to the second DNAI is allowed to be migrated to the first DNAI.

For specific implementation processes of S505 to S507 in the above, refer to content of S303 in the above. Details are not described again.

S508: The SMF network element sends the first DNAI to an NRF network element, and correspondingly, the NRF network element receives the first DNAI from the SMF network element. The first DNAI may be carried in an Nnrf_NFDiscovery _Request message.

S509: The NRF network element sends an address of the UPF3 network element to the SMF network element, and correspondingly, the SMF network element receives the address of the UPF3 network element from the NRF network element. The address of the UPF3 network element may be carried in an Nnrf_NFDiscovery_Response message.

S510: The SMF network element sends a request 2 to the UPF3 network element, and correspondingly, the UPF2 network element receives the request 2 from the SMF network element. The request 2 may be an N4 session establishment request. The request 2 may be used to request the UPF3 network element to allocate a tunnel identifier to the first tunnel. The first tunnel is a tunnel (namely, an N9 tunnel) used to transmit a data packet between the UPF1 network element and the UPF3 network element.

S511: The UPF3 network element sends a first identifier to the SMF network element, and correspondingly, the SMF network element receives the first identifier from the UPF3 network element. The first identifier may be carried in an N4 session establishment response. The first identifier is the tunnel identifier allocated by the UPF3 network element to the first tunnel.

S512: The SMF network element sends a session modification request to the UPF1 network element, and correspondingly, the UPF1 network element receives the session modification request from the SMF network element. The session modification request may be an N4 session modification request. The session modification request may be used to request the UPF1 network element to allocate a tunnel identifier to the first tunnel. The session modification request may include the first identifier.

S513: The UPF1 network element sends a second identifier to the SMF network element, and correspondingly, the SMF network element receives the second identifier from the UPF1 network element. The second identifier may be carried in the N4 session modification response. The second identifier is the tunnel identifier allocated by the UPF1 network element to the first tunnel.

S514: The SMF network element sends the second identifier to the UPF3 network element, and correspondingly, the UPF3 network element receives the second identifier from the SMF network element. The second identifier may be carried in the N4 session modification response.

S515: The UPF1 network element establishes the first tunnel based on the first identifier and the second identifier, and the UPF3 network element establishes the first tunnel based on the first identifier and the second identifier.

For specific implementation processes of S508 to S515 in the above, refer to content of S302 in the above. Details are not described again.

S516: The UPF1 network element sends the first data packet to the UPF3 network element, and correspondingly, the UPF3 network element receives the first data packet from the UPF1 network element.

For a specific implementation process of S516 in the above, refer to content of S303 in the above. Details are not described again.

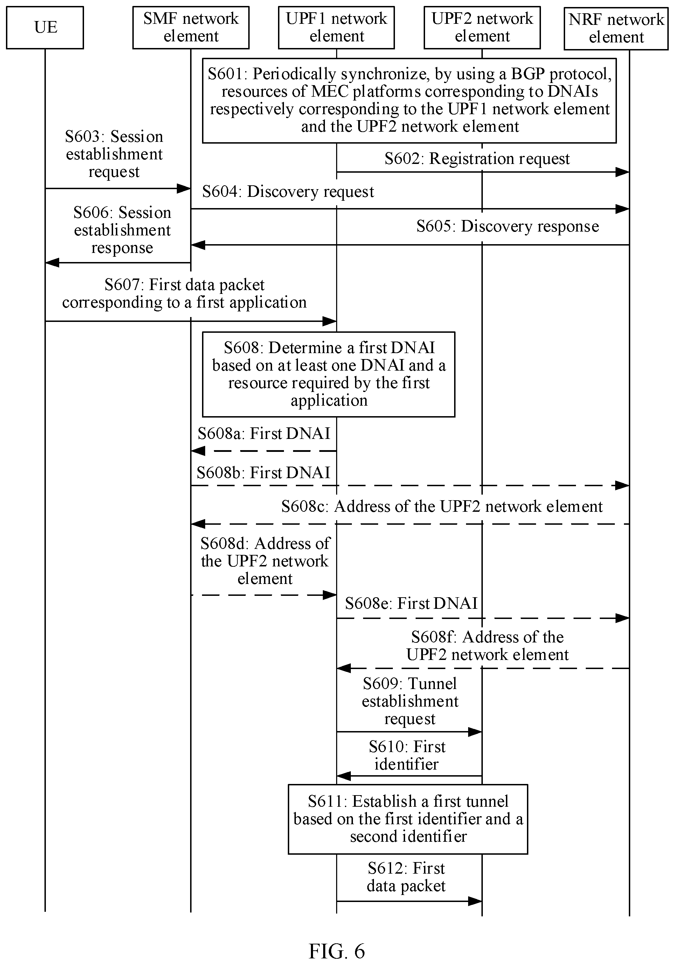

FIG. 6 is another schematic flowchart of a communication method according to an embodiment of this application. It should be understood that FIG. 6 is an example interaction diagram of the method shown in FIG. 3. This embodiment of this application is not limited thereto. The method shown in FIG. 6 may be applied to the network architecture in FIG. 2A. In the embodiment shown in FIG. 6, an example in which a first UPF network element is a UPF1 network element and a second UPF network element is a UPF2 network element is used.

S601: The UPF1 network element and the UPF2 network element periodically synchronize, by using a BGP protocol, resources of MEC platforms corresponding to DNAIs respectively corresponding to the UPF1 network element and the UPF2 network element. Optionally, the UPF1 network element and the UPF2 network element synchronize respective addresses thereof by using the BGP protocol.

S602: The UPF1 network element sends a registration request to an NRF network element, and correspondingly, the NRF network element receives the registration request from the UPF1 network element. The registration request may be an Nnrf_NFManagement_NFRegister Request message. The registration request may include but is not limited to one or more of the following information: a DNN corresponding to the UPF1 network element, S-NSSAI corresponding to the UPF1 network element, or indication information 3. The indication information 3 may indicate that the UPF1 network element has a computational power routing capability.

S603: UE sends a session establishment request to an SMF network element, and correspondingly, the SMF network element receives the session establishment request from the UE. The session establishment request may be used to request the SMF network element to establish a first session, and the first session may be used by the UE to access a first application. The session establishment request may include but is not limited to one or more pieces of the following information: a DNN corresponding to the first session, S-NSSAI corresponding to the first session, or indication information 1. The indication information 1 may indicate that a data packet transmitted in the first session has a computational power routing requirement.

S604: The SMF network element sends a discovery request to the NRF network element, and correspondingly, the NRF network element receives the discovery request from the SMF network element. The discovery request may be an Nnrf_NFDiscovery _Request message. The discovery request may be used to request the NRF network element to discover a UPF network element having the computational power routing capability. The discovery request may include but is not limited to one or more pieces of the following information: the DNN corresponding to the first session, the S-NSSAI corresponding to the first session, location information of the UE, or indication information 2. The indication information 2 may indicate the NRF network element to discover a UPF network element having a computational power routing capability.

S605: The NRF network element sends a discovery response to the SMF network element, and correspondingly, the SMF network element receives the discovery response from the NRF network element. The discovery response may be an Nnrf_NFDiscovery_Response message. The discovery response includes an address of the UPF1 network element. Optionally, the discovery response further includes indication information that may indicate that the UPF1 network element has the computational power routing capability.

For specific implementation processes of S601 to S605 in the above, refer to content of S401 to S405 in the above. Details are not described again.

S606: The SMF network element sends a session establishment response to the UE, and correspondingly, the UE receives the session establishment response from the SMF network element. The session establishment response may indicate that the first session is successfully established.

S607: The UE sends a first data packet corresponding to the first application to the UPF1 network element, and correspondingly, the UPF1 network element receives the first data packet corresponding to the first application from the UE.

For specific implementation processes of S606 and S607 in the above, refer to content of S407 and S408 in the above. Details are not described again.

S608: The UPF1 network element determines a first DNAI based on at least one DNAI and a resource required by the first application. The at least one DNAI may be a DNAI corresponding to the first application, and the DNAI corresponding to the first application may be a DNAI corresponding to a deployment location of the first application. For example, if an application server supporting the first application is deployed on an MEC platform corresponding to a DNAI #1, the DNAI #1 is one DNAI corresponding to the first application. The resource required by the first application may be a computational power resource of an application server that supports the first application and that is deployed on an MEC platform corresponding to the DNAI corresponding to the first application. The first DNAI may be a DNAI corresponding to the UPF2 network element. The UPF2 network element may be a UPF network element, namely, a next-hop UPF network element, that is required by a next-hop forwarding path and that is determined when the UPF1 network element performs computational power routing and forwarding on the first data packet that corresponds to the first application and that is from the UE. The next-hop UPF network element is a next hop of the UPF1 network element. For example, the UPF1 network element forwards the data packet to the UPF2 network element.

Optionally, after the UPF1 network element determines the first DNAI based on the at least one DNAI and the resource required by the first application, S608 in the above further includes the following steps.

S608a: The UPF1 network element sends the first DNAI to the SMF network element, and correspondingly, the SMF network element receives the first DNAI from the UPF1 network element.

S608b: The SMF network element sends the first DNAI to the NRF network element, and correspondingly, the NRF network element receives the first DNAI from the SMF network element. The first DNAI may be carried in an Nnrf_NFDiscovery _Request message.

S608c: The NRF network element sends an address of the UPF2 network element to the SMF network element, and correspondingly, the SMF network element receives the address of the UPF2 network element from the NRF network element. The address of the UPF2 network element may be carried in an Nnrf_NFDiscovery_Response message.

S608d: The SMF network element sends the address of the UPF2 network element to the UPF1 network element, and correspondingly, the UPF1 network element receives the address of the UPF2 network element from the SMF network element.

Optionally, after the UPF1 network element determines the first DNAI based on the at least one DNAI and the resource required by the first application, S608 in the above further includes the following steps.

S608e: The UPF1 network element sends the first DNAI to the NRF network element, and correspondingly, the NRF network element receives the first DNAI from the UPF1 network element. The first DNAI may be carried in an Nnrf_NFDiscovery _Request message.

S608f: The NRF network element sends the address of the UPF2 network element to the UPF1 network element, and correspondingly, the UPF1 network element receives the address of the UPF2 network element from the NRF network element. The address of the UPF2 network element may be carried in an Nnrf_NFDiscovery_Response message.

S608a to S608f in the above are optional steps, and are represented by dashed lines in FIG. 6. For specific implementation processes of S608 and S608a to S608f in the above, refer to content of S302 in the above. Details are not described again.

S609: The UPF1 network element sends a tunnel establishment request to the UPF2 network element, and correspondingly, the UPF2 network element receives the tunnel establishment request from the UPF1 network element. The tunnel establishment request includes a second identifier, the second identifier is a tunnel identifier allocated by the UPF1 network element to a first tunnel, and the first tunnel is a tunnel (namely, an N9 tunnel) used to transmit a data packet between the UPF1 network element and the UPF2 network element.

S610: The UPF2 network element sends a first identifier to the UPF1 network element, and correspondingly, the UPF1 network element receives the first identifier from the UPF2 network element. The first identifier is a tunnel identifier allocated by the UPF2 network element to the first tunnel.

S611: The UPF1 network element establishes the first tunnel based on the first identifier and the second identifier, and the UPF2 network element establishes the first tunnel based on the first identifier and the second identifier.

S612: The UPF1 network element sends the first data packet to the UPF2 network element, and correspondingly, the UPF2 network element receives the first data packet from the UPF1 network element.

For specific implementation processes of S609 to S612 in the above, refer to content of S303 in the above. Details are not described again.

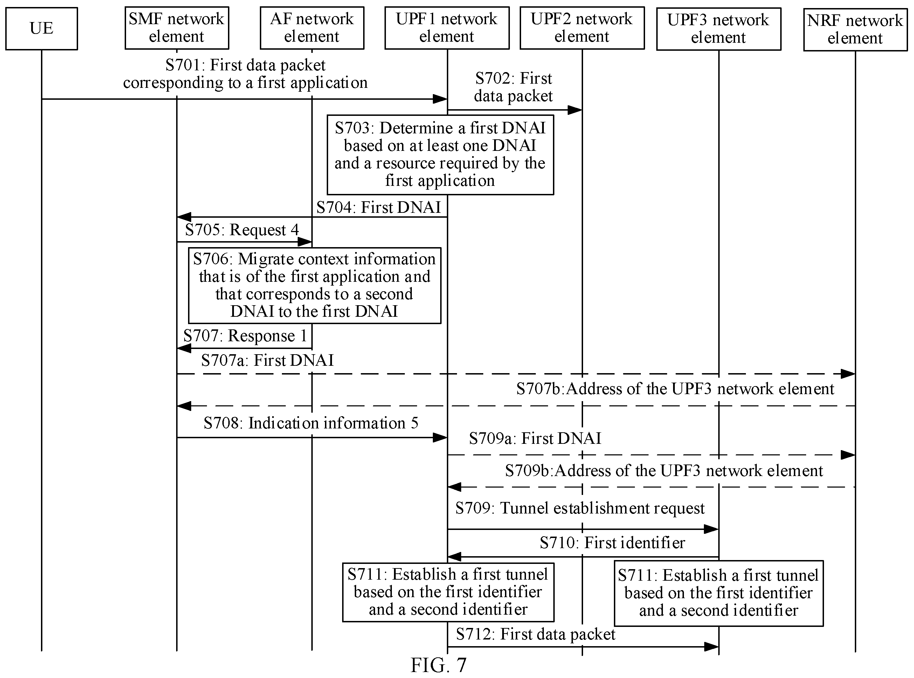

FIG. 7 is another schematic flowchart of a communication method according to an embodiment of this application. It should be understood that FIG. 7 is an example interaction diagram of the method shown in FIG. 3. This embodiment of this application is not limited thereto. The method shown in FIG. 7 may be applied to the network architecture in FIG. 2A. In the embodiment shown in FIG. 7, an example in which a first UPF network element is a UPF1 network element and a second UPF network element is a UPF3 network element is used.

S701: UE sends a first data packet corresponding to a first application to the UPF1 network element, and correspondingly, the UPF1 network element receives the first data packet corresponding to the first application from the UE.

S702: The UPF1 network element sends the first data packet to a UPF2 network element, and correspondingly, the UPF2 network element receives the first data packet from the UPF1 network element.

S703: The UPF1 network element determines a first DNAI based on at least one DNAI and a resource required by the first application. The at least one DNAI may be a DNAI corresponding to the first application, and the DNAI corresponding to the first application may be a DNAI corresponding to a deployment location of the first application. For example, if an application server supporting the first application is deployed on an MEC platform corresponding to a DNAI #1, the DNAI #1 is one DNAI corresponding to the first application. The resource required by the first application may be a computational power resource of an application server that supports the first application and that is deployed on an MEC platform corresponding to the DNAI corresponding to the first application. The first DNAI may be a DNAI corresponding to the UPF3 network element. The UPF3 network element may be a UPF network element, namely, a next-hop UPF network element, that is required by a next-hop forwarding path and that is determined when the UPF1 network element performs computational power routing and forwarding on the first data packet that corresponds to the first application and that is from the UE. The next-hop UPF network element is a next hop of the UPF1 network element. For example, the UPF1 network element forwards the data packet to the UPF3 network element.

S704: The UPF1 network element sends the first DNAI to an SMF network element, and correspondingly, the SMF network element receives the first DNAI from the UPF1 network element.

S705: The SMF network element sends a request 4 to an AF network element, and correspondingly, the AF network element receives the request 4 from the SMF network element. The request 4 may be an Nsmf_EventExposure_Notify message. The request 4 may be used to request to migrate context information that is of the first application and that corresponds to a second DNAI to the first DNAI. The second DNAI may be a DNAI corresponding to the UPF2 network element in S702. The request 4 may include the first DNAI. Optionally, the request 4 may further include indication information 4. The indication information 4 may indicate that the first DNAI is determined, based on the resource required by the first application, from at least one DNAI corresponding to the first application.

S706: The AF network element migrates context information that is of the first application and that corresponds to a second DNAI to the first DNAI.

S707: The AF network element sends a response 1 to the SMF network element, and correspondingly, the SMF network element receives the response 1 from the AF network element. The response 1 may be an Nsmf_EventExposure_AppRelocationInfo message. The response 1 may indicate that the context information that is of the first application and that corresponds to the second DNAI is allowed to be migrated to the first DNAI.

Optionally, after the SMF network element receives the response 1 from the AF network element, S707 in the above further includes the following step:
S707a: The SMF network element sends the first DNAI to an NRF network element, and correspondingly, the NRF network element receives the first DNAI from the SMF network element. The first DNAI may be carried in an Nnrf_NFDiscovery _Request message.
S707b: The NRF network element sends an address of the UPF3 network element to the SMF network element, and correspondingly, the SMF network element receives the address of the UPF3 network element from the NRF network element. The address of the UPF3 network element may be carried in an Nnrf_NFDiscovery_Response message.
S707a and S707b in the above are optional steps, and are represented by dashed lines in FIG. 7. For specific implementation processes of S701 to S707 and S707a and S707b in the above, refer to content of S501 to S509 in the above. Details are not described again.
S708: The SMF network element sends indication information 5 to the UPF1 network element, and correspondingly, the UPF1 network element may receive the indication information 5 from the SMF network element. The indication information 5 may indicate the UPF1 network element to send the first data packet to the UPF network element corresponding to the first DNAI. Optionally, the indication information 5 may indicate the UPF1 network element to send the first data packet to the UPF3 network element, and the indication information 5 includes the address of the UPF3 network element.

For a specific implementation process of S708 in the above, refer to content of S303 in the above. Details are not described again.

S709: The UPF1 network element sends a tunnel establishment request to the UPF3 network element, and correspondingly, the UPF3 network element receives the tunnel establishment request from the UPF1 network element. The tunnel establishment request includes a second identifier, the second identifier is a tunnel identifier allocated by the UPF1 network element to a first tunnel, and the first tunnel is a tunnel (namely, an N9 tunnel) used to transmit a data packet between the UPF1 network element and the UPF3 network element.

Optionally, before the UPF1 network element sends the tunnel establishment request to the UPF3 network element, S709 in the above further includes the following steps.

S709a: The UPF1 network element sends the first DNAI to an NRF network element, and correspondingly, the NRF network element receives the first DNAI from the UPF1 network element. The first DNAI may be carried in an Nnrf_NFDiscovery _Request message.

S709b: The NRF network element sends the address of the UPF3 network element to the UPF1 network element, and correspondingly, the UPF1 network element receives the address of the UPF3 network element from the NRF network element. The address of the UPF3 network element may be carried in an Nnrf_NFDiscovery_Response message.

S709a and S709b in the above are optional steps, and are represented by dashed lines in FIG. 7. For specific implementation processes of S709a and S709b in the above, refer to content of S302 in the above. Details are not described again.

S710: The UPF3 network element sends a first identifier to the UPF1 network element, and correspondingly, the UPF1 network element receives the first identifier from the UPF3 network element. The first identifier is a tunnel identifier allocated by the UPF3 network element to the first tunnel.

S711: The UPF1 network element establishes the first tunnel based on the first identifier and the second identifier, and the UPF3 network element establishes the first tunnel based on the first identifier and the second identifier.

S712: The UPF1 network element sends the first data packet to the UPF3 network element, and correspondingly, the UPF3 network element receives the first data packet from the UPF1 network element.

For specific implementation processes of S709 to S712 in the above, refer to content of S609 to S612 in the above. Details are not described again.

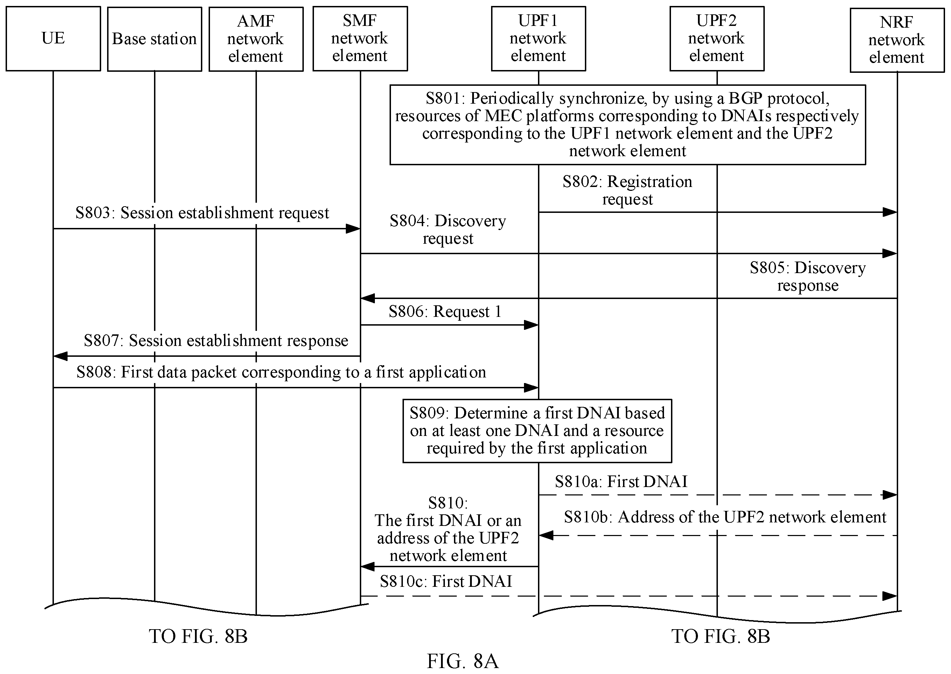

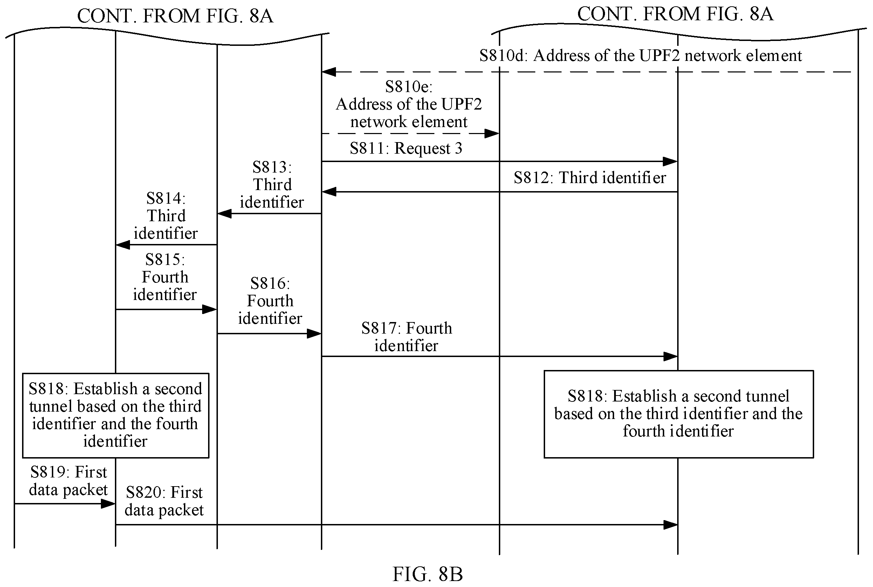

FIG. 8A and FIG. 8B are another schematic flowchart of a communication method according to an embodiment of this application. It should be understood that FIG. 8A and FIG. 8B are an example interaction diagram of the method shown in FIG. 3. This embodiment of this application is not limited thereto. The method shown in FIG. 8A and FIG. 8B may be applied to the network architecture in FIG. 2B. In the embodiment shown in FIG. 8A and FIG. 8B, an example in which a first UPF network element is a UPF1 network element and a second UPF network element is a UPF2 network element is used.

S801: The UPF1 network element and the UPF2 network element periodically synchronize, by using a BGP protocol, resources of MEC platforms corresponding to DNAIs respectively corresponding to the UPF1 network element and the UPF2 network element. Optionally, the UPF1 network element and the UPF2 network element periodically synchronize respective addresses thereof by using the BGP protocol.

S802: The UPF1 network element sends a registration request to an NRF network element, and correspondingly, the NRF network element receives the registration request from the UPF1 network element. The registration request may be an Nnrf_NFManagement_NFRegister Request message. The registration request may include but is not limited to one or more of the following information: a DNN corresponding to the UPF1 network element, S-NSSAI corresponding to the UPF1 network element, or indication information 3. The indication information 3 may indicate that the UPF1 network element has a computational power routing capability.

S803: UE sends a session establishment request to an SMF network element, and correspondingly, the SMF network element receives the session establishment request from the UE. The session establishment request may be used to request the SMF network element to establish a first session, and the first session may be used by the UE to access a first application. The session establishment request may include but is not limited to one or more pieces of the following information: a DNN corresponding to the first session, S-NSSAI corresponding to the first session, or indication information 1. The indication information 1 may indicate that a data packet transmitted in the first session has a computational power routing requirement.

S804: The SMF network element sends a discovery request to the NRF network element, and correspondingly, the NRF network element receives the discovery request from the SMF network element. The discovery request may be an Nnrf_NFDiscovery _Request message. The discovery request may be used to request the NRF network element to discover a UPF network element having the computational power routing capability. The discovery request may include but is not limited to one or more of the following information: a DNN corresponding to the first session, S-NSSAI corresponding to the first session, location information of the UE, or indication information 2. The indication information 2 may indicate the NRF network element to discover a UPF network element having a computational power routing capability.

S805: The NRF network element sends a discovery response to the SMF network element, and correspondingly, the SMF network element receives the discovery response from the NRF network element. The discovery response may be an Nnrf_NFDiscovery_Response message. The discovery response includes an address of the UPF1 network element. Optionally, the discovery response further includes indication information that may indicate that the UPF1 network element has the computational power routing capability.

S806: The SMF network element sends a request 1 to the UPF1 network element, and correspondingly, the UPF1 network element receives the request 1 from the SMF network element. The request 1 may be used to request the UPF1 network element to report information about a next-hop UPF network element after receiving a data packet from the UE, and the next-hop UPF network element is a next hop of a base station, where for example, the base station forwards the data packet to the next-hop UPF network element, and the information about the next-hop UPF network element includes a DNAI corresponding to the next-hop UPF network element and/or an address of the next-hop UPF network element.

After receiving the discovery response from the NRF network element, the SMF network element may determine that the UPF1 network element has the computational power routing capability. In other words, the SMF network element may determine that the UPF1 network element can perform computational power routing and forwarding on the data packet from the UE, to satisfy the computational power routing requirement of the data packet transmitted by the UE in the first session. Therefore, the SMF network element may send the request 1 to the UPF1 network element, to obtain information about a next-hop forwarding path determined when the UPF1 network element performs computational power routing and forwarding on the first data packet that corresponds to the first application and that is from the UE, where the information about the next-hop forwarding path includes a DNAI (namely, a first DNAI) corresponding to the next-hop UPF network element and/or an address of the next-hop UPF network element (namely, the UPF2 network element), and the next-hop UPF network element is a next hop of the base station, for example, the base station no longer forwards the data packet to the UPF1 network element, but forwards the data packet to the UPF2 network element.

S807: The SMF network element sends a session establishment response to the UE, and correspondingly, the UE receives the session establishment response from the SMF network element. The session establishment response may indicate that the first session is successfully established.

S808: The UE sends the first data packet corresponding to the first application to the UPF1 network element, and correspondingly, the UPF1 network element receives the first data packet for accessing the first application from the UE.

S809: The UPF1 network element determines the first DNAI based on at least one DNAI and a resource required by the first application. The at least one DNAI may be a DNAI corresponding to the first application, and the DNAI corresponding to the first application may be a DNAI corresponding to a deployment location of the first application. For example, if an application server supporting the first application is deployed on an MEC platform corresponding to a DNAI #1, the DNAI #1 is one DNAI corresponding to the first application. The resource required by the first application may be a computational power resource of an application server that supports the first application and that is deployed on an MEC platform corresponding to the DNAI corresponding to the first application. The first DNAI may be a DNAI corresponding to the UPF2 network element. The UPF2 network element may be a UPF network element, namely, a next-hop UPF network element, that is required by a next-hop forwarding path and that is determined when the UPF1 network element performs computational power routing and forwarding on the first data packet that corresponds to the first application and that is from the UE. The next-hop UPF network element is a next hop of the base station, for example, the base station no longer forwards the data packet to the UPF1 network element, but forwards the data packet to the UPF2 network element.

S810: The UPF1 network element sends the first DNAI and/or the address of the UPF2 network element to the SMF network element, and correspondingly, the SMF network element receives the first DNAI and/or the address of the UPF2 network element from the UPF1 network element.

Optionally, when the UPF1 network element sends the address of the UPF2 network element to the SMF network element, before the UPF1 network element sends the address of the UPF2 network element to the SMF network element, S810 in the above further includes the following steps.

S810a: The UPF1 network element sends the first DNAI to the NRF network element, and correspondingly, the NRF network element receives the first DNAI from the UPF1 network element.

S810b: The NRF network element sends the address of the UPF2 network element to the UPF1 network element, and correspondingly, the UPF1 network element receives the address of the UPF2 network element from the NRF network element.

Optionally, when the UPF1 network element sends the first DNAI to the SMF network element, after the UPF1 network element sends the first DNAI to the SMF network element, S810 in the above further includes the following steps.

S810c: The SMF network element sends the first DNAI to the NRF network element, and correspondingly, the NRF network element receives the first DNAI from the SMF network element.

S810d: The NRF network element sends the address of the UPF2 network element to the SMF network element, and correspondingly, the SMF network element receives the address of the UPF2 network element from the NRF network element.

S810e: The SMF network element sends the address of the UPF2 network element to the UPF1 network element, and correspondingly, the UPF1 network element receives the address of the UPF2 network element from the SMF network element.

S810a to S810e in the above are optional steps, and are represented by dashed lines in FIG. 8A and FIG. 8B. For specific implementation processes of S801 to S810 and S810a to S810e in the above, refer to content of S401 to S410 and S410a to S410e in the above. Details are not described again.

S811: The SMF network element sends a request 3 to the UPF2 network element, and correspondingly, the UPF2 network element receives the request 3 from the SMF network element. The request 3 may be an N4 session establishment request. The request 3 may be used to request the UPF2 network element to allocate a tunnel identifier to a second tunnel, where the second tunnel is a tunnel (namely, an N3 tunnel) used to transmit a data packet between the base station and the UPF2 network element.

S812: The UPF2 network element sends a third identifier to the SMF network element, and correspondingly, the SMF network element receives the third identifier from the UPF2 network element. The third identifier may be carried in an N4 session establishment response. The third identifier is the tunnel identifier allocated by the UPF2 network element to the second tunnel.

S813: The SMF network element sends the third identifier to an AMF network element, and correspondingly, the AMF network element receives the third identifier from the SMF network element. The third identifier may be carried in N2 SM information of an Namf_Communication _N1N2MessageTransfer message.

S814: The AMF network element sends the third identifier to the base station, and correspondingly, the base station receives the third identifier from the AMF network element. The third identifier may be carried in N2 SM information of an N2 message.

S815: The base station sends a fourth identifier to the AMF network element, and correspondingly, the AMF network element receives the fourth identifier from the base station. The fourth identifier is a tunnel identifier allocated by the base station to the second tunnel. The fourth identifier may be carried in N2 SM information of an N2 message.

S816: The AMF network element sends the fourth identifier to the SMF network element, and correspondingly, the SMF network element receives the fourth identifier from the AMF network element. The fourth identifier may be carried in N2 SM information of an Nsmf_PDUSession_UpdateSMContext message.

S817: The SMF network element sends the fourth identifier to the UPF2 network element, and correspondingly, the UPF2 network element receives the fourth identifier from the SMF network element. The fourth identifier may be carried in an N4 session modification request.

S818: The UPF2 network element establishes the second tunnel based on the third identifier and the fourth identifier, and the base station establishes the second tunnel based on the third identifier and the fourth identifier.

For specific implementation processes of S811 to S818 in the above, refer to content of S302 in the above. Details are not described again.

S819: The UE sends the first data packet to the base station, and correspondingly, the base station receives the first data packet from the UE.

S820: The base station sends the first data packet to the UPF2 network element, and correspondingly, the UPF2 network element receives the first data packet from the base station.

For specific implementation processes of S819 to S880 in the above, refer to content of S302 in the above. Details are not described again.

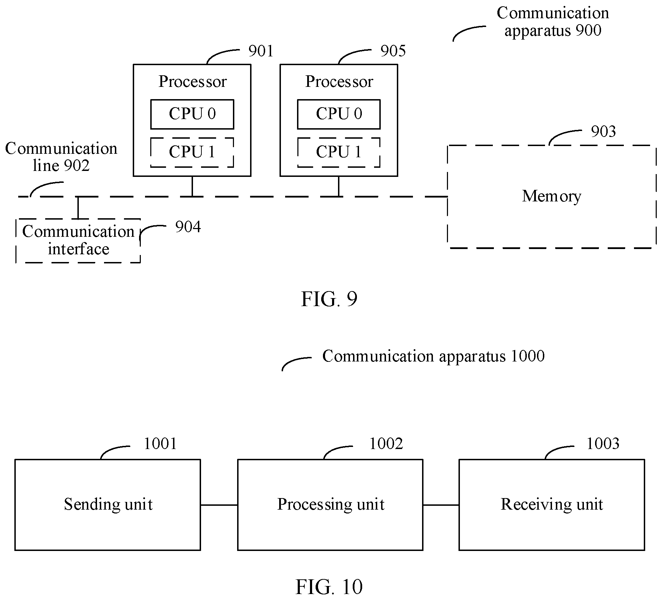

FIG. 9 is a diagram of a structure of a communication apparatus according to an embodiment of this application. The communication apparatus 900 may be the first UPF network element in the embodiment shown in any accompanying drawing of FIG. 3 to FIG. 8A and FIG. 8B or a circuit system of the first UPF network element, and is configured to implement the method corresponding to the first UPF network element in the foregoing method embodiments. Alternatively, the communication apparatus 900 may be the SMF network element in the embodiment shown in any accompanying drawing of FIG. 4A and FIG. 4B to FIG. 8A and FIG. 8B or a circuit system of the SMF network element, and is configured to implement the method corresponding to the SMF network element in the foregoing method embodiments. Alternatively, the communication apparatus 900 may be the second UPF network element in the embodiment shown in any accompanying drawing of FIG. 3 to FIG. 8A and FIG. 8B or a circuit system of the second UPF network element, and is configured to implement the method corresponding to the second UPF network element in the foregoing method embodiments. Alternatively, the communication apparatus 900 may be the NRF network element in the embodiment shown in any accompanying drawing of FIG. 4A and FIG. 4B to FIG. 8A and FIG. 8B or a circuit system of the NRF network element, and is configured to implement the method corresponding to the NRF network element in the foregoing method embodiments. Alternatively, the communication apparatus 900 may be the AF network element in the embodiment shown in any accompanying drawing of FIG. 5 to FIG. 7 or a circuit system of the AF network element, and is configured to implement the method corresponding to the AF network element in the foregoing method embodiments. Alternatively, the communication apparatus 900 may be the AMF network element in the embodiment shown in FIG. 8A and FIG. 8B or a circuit system of the AMF network element, and is configured to implement the method corresponding to the AMF network element in the foregoing method embodiments. Alternatively, the communication apparatus 900 may be the base station in the embodiment shown in any accompanying drawing of FIG. 8A and FIG. 8B to FIG. 8A and FIG. 8B or a circuit system of the base station, and is configured to implement the method corresponding to the base station in the foregoing method embodiments. For example, one circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. The memory 903, the communication line 902, and the communication interface 904 are all optional, and therefore are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for transmitting information between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer. However, this is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls the execution. The processor 901 is configured to execute the computer-executable instructions stored in the memory 903, to implement the steps performed by the first UPF network element, the SMF network element, the second UPF network element, the NRF network element, the AF network element, the AMF network element, or the base station in the embodiment shown in any accompanying drawing of FIG. 3 to FIG. 8A and FIG. 8B.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first UPF network element, a chip of the SMF network element, a chip of the second UPF network element, a chip of the NRF network element, a chip of the AF network element, a chip of the AMF network element, or a chip of the base station, the chip includes the processor 901 (and may further include the processor 905), the communication line 902, and the communication interface 904. Optionally, the chip may include the memory 903. Specifically, the communication interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that, in embodiments of this application, module division is an example, and is merely logical function division. In actual implementation, another division manner may be used. For example, when each functional module is obtained through division based on each corresponding function, FIG. 10 is a diagram of an apparatus. The apparatus 1000 may be the first UPF network element, the SMF network element, the second UPF network element, the NRF network element, the AF network element, the AMF network element, or the base station in the foregoing method embodiments, the apparatus 1000 may be a chip of the first UPF network element, a chip of the SMF network element, a chip of the second UPF network element, a chip of the NRF network element, a chip of the AF network element, a chip of the AMF network element, or a chip of the base station in the foregoing method embodiments. The apparatus 1000 includes a sending unit 1001, a processing unit 1002, and a receiving unit 1003.

It should be understood that the apparatus 1000 may be configured to implement the steps performed by the first UPF network element, the SMF network element, the second UPF network element, the NRF network element, the AF network element, the AMF network element, or the base station in the communication method in embodiments of this application. For related features, refer to the embodiment shown in any accompanying drawing of FIG. 3 to FIG. 8A and FIG. 8B. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may alternatively be implemented by using a pin, a circuit, or the like.

This application further provides a computer-readable storage medium. The computer-readable storage medium stores a computer program or instructions. When the computer program or the instructions are run, the method performed by the first UPF network element, the SMF network element, the second UPF network element, the NRF network element, the AF network element, the AMF network element, or the base station in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code runs on a computer, the computer is enabled to perform the method performed by the first UPF network element, the SMF network element, the second UPF network element, the NRF network element, the AF network element, the AMF network element, or the base station in any one of the foregoing method embodiments.

An embodiment of this application further provides a processing apparatus, including a processor and an interface. The processor is configured to perform the method performed by the first UPF network element, the SMF network element, the second UPF network element, the NRF network element, the AF network element, the AMF network element, or the base station in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may alternatively be disposed in different parts of the terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the first UPF network element, the SMF network element, the second UPF network element, the NRF network element, the AF network element, the AMF network element, or the base station may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, applied to a first user plane function network element, wherein the method comprises:
receiving a first data packet from a terminal device, wherein the first data packet corresponds to a first application;
determining a second user plane function network element based on at least one data network access identifier DNAI and a resource required by the first application, wherein the at least one DNAI is a DNAI corresponding to the first application, and the second user plane function network element corresponds to a first DNAI in the at least one DNAI; and
sending the first data packet to the second user plane function network element.

2. The method according to claim 1, wherein determining the second user plane function network element comprises:
sending the first DNAI to a first network element, and receiving an address of the second user plane function network element from the first network element.

3. The method according to claim 2, wherein the first network element comprises a session management function network element or a network repository function network element.

4. The method according to claim 1, wherein determining the second user plane function network element comprises:
determining an address of the second user plane function network element based on an address of a user plane function network element corresponding to the at least one DNAI, wherein the user plane function network element corresponding to the at least one DNAI comprises the second user plane function network element.

5. The method according to claim 4, wherein the method further comprises:
sending the address of the second user plane function network element to the session management function network element.

6. The method according to claim 3 or 5, wherein the method further comprises:
receiving first indication information from the session management function network element, wherein the first indication information indicates the first user plane function network element to send a data packet to the second user plane function network element.

7. The method according to claim 3 or 5, wherein the method further comprises:
receiving a session modification request from the session management function network element, wherein the session modification request is used to request the first user plane function network element to allocate a tunnel identifier to a first tunnel, the first tunnel is a tunnel used to transmit a data packet between the first user plane function network element and the second user plane function network element, the session modification request comprises a first identifier, and the first identifier is a tunnel identifier allocated by the second user plane function network element to the first tunnel;
sending a second identifier to the session management function network element, wherein the second identifier is the tunnel identifier allocated by the first user plane function network element to the first tunnel; and
establishing the first tunnel based on the first identifier and the second identifier.

8. The method according to any one of claims 2 to 6, wherein the method further comprises:
sending a tunnel establishment request to the second user plane function network element, wherein the tunnel establishment request comprises a second identifier, the second identifier is a tunnel identifier allocated by the first user plane function network element to a first tunnel, and the first tunnel is a tunnel used to transmit a data packet between the first user plane function network element and the second user plane function network element;
receiving a first identifier from the second user plane function network element, wherein the first identifier is a tunnel identifier allocated by the second user plane function network element to the first tunnel; and
establishing the first tunnel based on the first identifier and the second identifier.

9. The method according to any one of claims 1 to 8, wherein the method further comprises:
receiving a first request from the session management function network element, wherein the first request is used to request the first user plane function network element to report first information after receiving a data packet from the terminal device, the first information comprises a DNAI and/or an address, and the first information is used to determine the second user plane function network element.

10. The method according to any one of claims 1 to 9, wherein the method further comprises:
sending a registration request to the network repository function network element, wherein the registration request comprises one or more pieces of the following information:
a data network name DNN corresponding to the first user plane function network element;
single network slice selection assistance information S-NSSAI corresponding to the first user plane function network element; or
second indication information, indicating that the first user plane function network element has a computational power routing capability, wherein the computational power routing capability is used by the first user plane function network element to forward a data packet of an application based on a resource required by the application.

11. A communication method, applied to a session management function network element, wherein the method comprises:
sending a first request to a first user plane function network element, wherein the first request is used to request the first user plane function network element to report first information after receiving a data packet from a terminal device, the first information comprises a DNAI and/or an address, the first information is used to determine a second user plane function network element, and the data packet corresponds to a first application;
receiving a first DNAI and/or an address of the second user plane function network element from the first user plane function network element, wherein the first DNAI is one of at least one DNAI, the at least one DNAI is a DNAI corresponding to the first application, and the second user plane function network element corresponds to the first DNAI; and
establishing, based on the first DNAI and/or the address of the second user plane function network element, a tunnel used to transmit a data packet.

12. The method according to claim 11, wherein the method further comprises:
sending the first DNAI to a network repository function network element;
receiving the address of the second user plane function network element from the network repository function network element; and
sending the address of the second user plane function network element to the first user plane function network element.

13. The method according to claim 11 or 12, wherein the method further comprises:
sending a second request to an application function network element, wherein the second request is used to request to migrate context information that is of the first application and that corresponds to a second DNAI to the first DNAI, the second DNAI is a DNAI other than the first DNAI in the at least one DNAI, the context information comprises historical information of the first application, and the second request comprises the first DNAI; and
receiving a first response from the application function network element, wherein the first response indicates that the context information that is of the first application and that corresponds to the second DNAI is allowed to be migrated to the first DNAI.

14. The method according to claim 13, wherein the second request further comprises third indication information, indicating that the first DNAI is determined from the at least one DNAI based on a resource required by the first application.

15. The method according to claim 13 or 14, wherein the method further comprises:
sending first indication information to the first user plane function network element, wherein the first indication information indicates the first user plane function network element to send a data packet to the second user plane function network element.

16. The method according to any one of claims 11 to 15, wherein establishing, based on the first DNAI and/or the address of the second user plane function network element, the tunnel used to transmit a data packet comprises:
establishing a first tunnel based on the first DNAI and/or the address of the second user plane function network element, wherein the first tunnel is a tunnel used to transmit a data packet between the first user plane function network element and the second user plane function network element; or
establishing a second tunnel based on the first DNAI and/or the address of the second user plane function network element, wherein the second tunnel is a tunnel used to transmit a data packet between an access network device and the second user plane function network element.

17. The method according to claim 16, wherein establishing the first tunnel based on the first DNAI and/or the address of the second user plane function network element comprises:
sending a third request to the second user plane function network element, wherein the third request is used to request the second user plane function network element to allocate a tunnel identifier to the first tunnel;
receiving a first identifier from the second user plane function network element, wherein the first identifier is the tunnel identifier allocated by the second user plane function network element to the first tunnel;
sending a session modification request to the first user plane function network element, wherein the session modification request is used to request the first user plane function network element to allocate a tunnel identifier to the first tunnel, and the session modification request comprises the first identifier;
receiving a second identifier from the first user plane function network element, wherein the second identifier is the tunnel identifier allocated by the first user plane function network element to the first tunnel; and
sending the second identifier to the second user plane function network element.

18. The method according to claim 16, wherein establishing the second tunnel based on the first DNAI and/or the address of the second user plane function network element comprises:
sending a fourth request to the second user plane function network element, wherein the fourth request is used to request the second user plane function network element to allocate a tunnel identifier to the second tunnel;
receiving a third identifier from the second user plane function network element, wherein the third identifier is the tunnel identifier allocated by the second user plane function network element to the second tunnel;
sending the third identifier to an access and mobility management function network element;
receiving a fourth identifier from the access and mobility management function network element, wherein the fourth identifier is a tunnel identifier allocated by the access network device to the second tunnel; and
sending the fourth identifier to the second user plane function network element.

19. The method according to any one of claims 11 to 18, wherein the method further comprises:
receiving a session establishment request from the terminal device, wherein the session establishment request is used to request the session management function network element to establish a first session, and the first session is used by the terminal device to access the first application;
sending a discovery request to the network repository function network element, wherein the discovery request is used to request the network repository function network element to discover a user plane function network element having a computational power routing capability, and the computational power routing capability is used by the user plane function network element to forward a data packet of an application based on a resource required by the application; and
receiving a discovery response from the network repository function network element, wherein the discovery response indicates that the first user plane function network element has the computational power routing capability.

20. The method according to claim 19, wherein the session establishment request comprises one or more pieces of the following information:
a DNN corresponding to the first session;
S-NSSAI corresponding to the first session; or
fourth indication information, indicating that a data packet transmitted in the first session has a computational power routing requirement.

21. The method according to claim 20, wherein the discovery request comprises one or more pieces of the following information:
the DNN corresponding to the first session;
the S-NSSAI corresponding to the first session;
location information of the terminal device; or
fifth indication information, indicating the network repository function network element to discover the user plane function network element having the computational power routing capability.

22. A communication apparatus, comprising a module configured to perform the method according to any one of claims 1 to 10, or a module configured to perform the method according to any one of claims 11 to 21.

23. A communication apparatus, comprising a processor and an interface circuit, wherein the interface circuit is configured to receive a signal from a communication apparatus other than the communication apparatus and transmit the signal to the processor, or send a signal from the processor to the communication apparatus other than the communication apparatus, and the processor is configured to implement the method according to any one of claims 1 to 10 or the method according to any one of claims 11 to 21 by using a logic circuit or by executing code instructions.

24. A communication apparatus, comprising:
a memory, configured to store a computer program; and
a processor, configured to invoke the computer program from the memory and run the computer program, to implement the method according to any one of claims 1 to 10, or implement the method according to any one of claims 11 to 21.

25. A chip system, comprising:
a memory, configured to store a computer program; and
a processor, configured to invoke the computer program from the memory and run the computer program, so that a device in which the chip system is installed performs the method according to any one of claims 1 to 10, or performs the method according to any one of claims 11 to 21.

26. A computer program product, comprising a computer program, wherein when the computer program is executed by a communication apparatus, the method according to any one of claims 1 to 21 is implemented.

27. A computer-readable storage medium, wherein the storage medium stores a computer program or instructions, and when the computer program or the instructions are executed by a communication apparatus, the method according to any one of claims 1 to 21 is implemented.

28. A communication system, comprising:
a first user plane function network element, configured to perform the method according to any one of claims 1 to 10; and
a session management function network element, configured to perform the method according to any one of claims 11 to 21.
